# EUROPEAN PATENT APPLICATION

(11) **EP 4 715 578 A1**
(43) Date of publication of application: **25.03.2026**
(21) Application number: 24810925.8
(22) Date of filing: 10.05.2024
(51) Int. Cl.: G06F 8/60, G06F 9/4401

(54) **INFORMATION PROCESSING DEVICE, INFORMATION PROCESSING METHOD, AND PROGRAM**

(30) Priority: 19.05.2023 JP 2023083202
(71) Applicant: Sony Group Corporation, Tokyo 108-0075 (JP)
(72) Inventor: ENDO, Kenta, Tokyo 108-0075 (JP)
(74) Representative: MFG Patentanwälte Meyer-Wildhagen Meggle-Freund Gerhard PartG mbB
(86) International application number: PCT/JP2024/017431
(87) International publication number: WO 2024/241917

(57) **Abstract**

An information processing apparatus according to the present technology includes a display control section which causes a configuration pattern presentment screen to be displayed on a basis of a user requirement on an application, the configuration pattern presentment screen used for prompting a user to select a configuration pattern of a system in which application software that realizes the application is to be deployed.

## Description

### Technical Field

The present technology relates to a technical field of an information processing apparatus, an information processing method, and a program for presenting a system configuration for realizing an application to a user.

### Background Art

Application software (hereinafter, will simply be referred to as "application") for solving various problems that users face may be introduced. In order to introduce an application, it is necessary to deploy the application on an appropriate apparatus.

For example, Patent Literature 1 below discloses a technology for dynamically arranging individual software components of a decentralized IoT (Internet of Things) application across entire hardware resources while taking into account the requirements and constraints of the application.

### Citation List

### Patent Literature

Patent Literature 1: Japanese Patent Application Laid-open No. 2021-503639

### Disclosure of Invention

### Technical Problem

However, it is not easy for a user to think of a system configuration that will favorably solve the problems of the user.

The present technology has been made in view of the problems as described above and aims at assisting a user in selecting a system configuration for realizing an application to be introduced.

### Solution to Problem

An information processing apparatus according to the present technology includes a display control section which causes a configuration pattern presentment screen to be displayed on a basis of a user requirement on an application, the configuration pattern presentment screen used for prompting a user to select a configuration pattern of a system in which application software that realizes the application is to be deployed.

Even if the user knows an application that he or she wishes to introduce, it is not easy for the user to think of a system configuration for realizing the application. With the present configuration, a screen for selecting a presented system configuration is presented to the user.

### Brief Description of Drawings

[Fig. 1] A diagram showing a configuration example of an information processing system.
[Fig. 2] A diagram for explaining each device that registers and downloads AI models and AI applications via a marketplace function provided in a cloud-side information processing apparatus.
[Fig. 3] A diagram showing, together with Fig. 4, an example of a flow of processing executed by each apparatus when registering and downloading an AI model or an AI application via the marketplace function.
[Fig. 4] A diagram showing, together with Fig. 3, an example of a flow of processing executed by each apparatus when registering and downloading an AI model or an AI application via the marketplace function.
[Fig. 5] A diagram for explaining a connection mode between the cloud-side information processing apparatus and an edge-side information processing apparatus.
[Fig. 6] A functional block diagram of the cloud-side information processing apparatus.
[Fig. 7] A block diagram showing an example of an internal configuration of a camera.
[Fig. 8] A diagram showing a configuration example of an image sensor.
[Fig. 9] A block diagram showing another example of the internal configuration of the camera.
[Fig. 10] A block diagram showing a software configuration of the camera.
[Fig. 11] A block diagram showing an operation environment of a container in a case where a container technology is used.
[Fig. 12] A block diagram showing an example of a hardware configuration of the information processing apparatus.
[Fig. 13] A diagram showing an example of a requirement input screen.
[Fig. 14] A diagram showing an example in which an AI application is configured to include a plurality of SW components.
[Fig. 15] A diagram showing additional information on the SW components.
[Fig. 16] A diagram showing storage sections and the like in which the SW components are to be deployed.
[Fig. 17] A diagram showing the plurality of SW components to be deployed.
[Fig. 18] A diagram showing an example of a configuration pattern presentment screen.
[Fig. 19] A diagram showing another example of general outline fields in the configuration pattern presentment screen.
[Fig. 20] A diagram showing an example of a deployment pattern presentment screen.
[Fig. 21] A flowchart showing an example of processing executed by the cloud-side information processing apparatus.
[Fig. 22] A flowchart showing an example of processing executed by the cloud-side information processing apparatus for simulating evaluation values and the like.
[Fig. 23] A diagram showing an example in which a system configuration including a plurality of fog servers and cameras and a deployment example are presented.
[Fig. 24] A diagram showing an example in which a deployment example in which the plurality of SW components are deployed on the camera and the AI sensor is presented.
[Fig. 25] A diagram showing an example in which a deployment example in which a single camera that has acquired an output from a plurality of AI sensors performs AI image processing is presented in a second embodiment.
[Fig. 26] A diagram showing an example of a system configuration including master cameras and slave cameras.
[Fig. 27] A diagram for explaining a flow of processing in other descriptions.
[Fig. 28] A diagram showing an example of a login screen for logging in to a marketplace.
[Fig. 29] A diagram showing an example of a developer screen that is presented to each developer who uses the marketplace.
[Fig. 30] A diagram showing an example of a user screen that is presented to an application user who uses the marketplace.

### Modes for Carrying Out the Invention

Hereinafter, embodiments of an information processing apparatus according to the present technology will be described in the following order with reference to the attached drawings.
<1. Information processing system>
<1-1. Overall system configuration>
<1-2. Registration of AI model and AI application>
<1-3. General outline of functions of system>
<1-4. Configuration of camera>
<1-5. Hardware configuration of information processing apparatus>
<2. First embodiment>
<3. Second embodiment>
<4. Modified examples>
<5. Others>
<6. Example of screen of marketplace>
<7. Summary>
<8. Present technology>

### <1. Information processing system>

### <1-1. Overall system configuration>

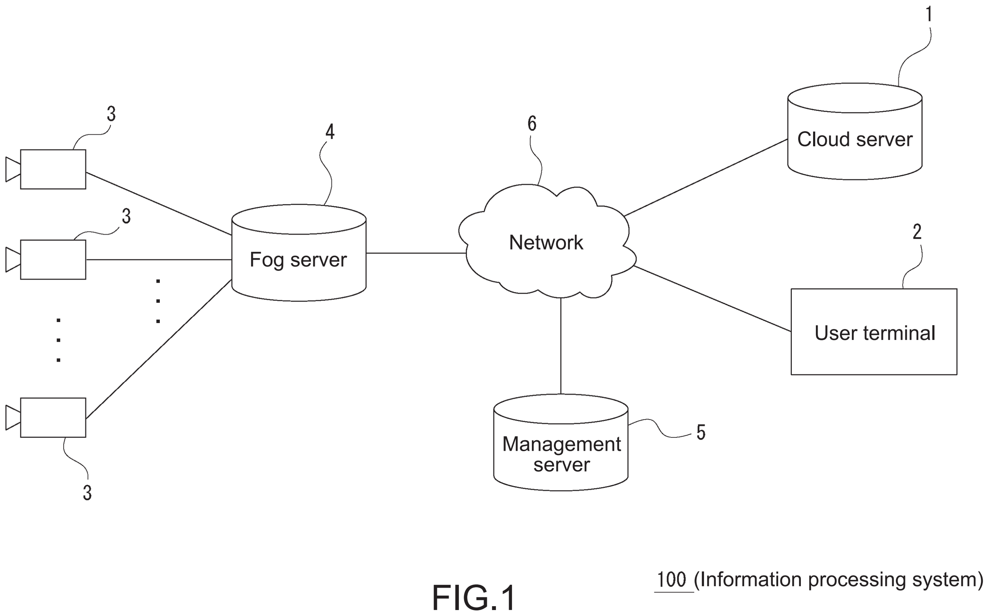

Fig. 1 is a block diagram showing a schematic configuration example of an information processing system 100 as an embodiment of the present technology.

As shown in the figure, the information processing system 100 includes at least a cloud server 1, a user terminal 2, a plurality of cameras 3, a fog server 4, and a management server 5. In the present example, for example, at least the cloud server 1, the user terminal 2, the fog server 4, and the management server 5 are capable of communicating with one another via a network 6 such as the Internet.

The cloud server 1, the user terminal 2, the fog server 4, and the management server 5 are each configured as an information processing apparatus equipped with a microcomputer including a CPU (Central Processing Unit), a ROM (Read Only Memory), and a RAM (Random Access Memory).

Here, the user terminal 2 is an information processing apparatus that is assumed to be used by a user who receives a service that uses the information processing system 100. Moreover, the management server 5 is an information processing apparatus that is assumed to be used by a provider of the service.

Each of the cameras 3 includes an image sensor GS such as a CCD (Charge Coupled Device) image sensor or a CMOS (Complementary Metal Oxide Semiconductor) image sensor, and captures an image of a subject to obtain image data (captured image data) as digital data.

Here, the image sensor GS refers not only to image sensors that generate color images or monochrome images by performing photoelectric conversion that is based on incident visible light, but also to various other sensors including a distance measurement sensor that generates a range image, an EVS (Event based Vision Sensor) that generates an image constituted of event data, a thermosensor that generates a heat map image, a spectroscopic sensor that generates a spectroscopic image, a polarization sensor that generates a polarization image, and the like.

In addition, even for the same type of image sensors that output color images, there are various image sensors including an image sensor having the number of pixels of 12M (mega), an image sensor having the number of pixels of 48M, an image sensor with a frame rate of 60 fps, 1000 fps, or the like, and the like.

That is, the image sensor GS includes a pixel array section in which pixels are arrayed two-dimensionally.

Further, image data refers not only to color image data or monochrome image data, but also to range image data, heat map image data, spectroscopic image data, polarization image data, image data constituted of event data, and the like in which information for each pixel is quantified in a plurality of levels.

Furthermore, as will be described later, each of the cameras 3 also has a function of performing processing on image data using artificial intelligence (AI) (for example, image recognition processing, image detection processing, and the like). In descriptions hereinafter, various types of processing with respect to images, such as the image recognition processing and the image detection processing, will simply be referred to as "image processing". Furthermore, various types of processing with respect to images using AI (or an AI model) will be referred to as "AI image processing".

Each of the cameras 3 is configured to be capable of performing data communication with the fog server 4, and is capable of transmitting various types of data such as processing result information indicating a result of processing that uses AI (image processing and/or the like) to the fog server 4 and receiving various types of data from the fog server 4.

Here, regarding the information processing system 100 shown in Fig. 1, for example, a use is assumed in which the fog server 4 or the cloud server 1 generates analysis information of a subject based on the processing result information obtained by the image processing of each camera 3, and the generated analysis information is viewed by a user via the user terminal 2.

In this case, various uses of surveillance cameras are conceivable as the use of each of the cameras 3. Examples of the use include a surveillance camera for indoors in a store, an office, a home, and the like, a surveillance camera for monitoring outdoors such as a parking lot, a street, and the like (including a traffic monitoring camera and the like), a surveillance camera for a manufacturing line in FA (Factory Automation) and IA (Industrial Automation), surveillance cameras for monitoring inside and outside of a vehicle, and the like.

For example, in the case of a use as a surveillance camera in a store, the plurality of cameras 3 may be arranged at predetermined positions in the store so that the user can check demographics of customers (genders, age groups, and the like), behaviors (flow lines) in the store, and the like. In this case, information on the demographics of customers, information on the flow lines of customers in the store, information on a congestion at a cash register (for example, a waiting time at the cash register), and the like may be generated as the analysis information described above.

Alternatively, in the case of a use as a traffic monitoring camera, the cameras 3 may be arranged at repsective positions near the road so that the user can recognize information on passing vehicles, such as a license plate number (vehicle number), a color of the vehicle, and a type of the vehicle. In this case, information on the license plate number, the color of the vehicle, the type of the vehicle, and the like may be generated as the analysis information described above.

Furthermore, when using a traffic monitoring camera in a parking lot, the camera may be arranged to be capable of monitoring each of the parked vehicles so as to monitor whether or not a suspicious individual behaving suspiciously is present around each of the vehicles, and if there is a suspicious individual, notify of the fact that there is a suspicious individual, an attribute of the suspicious individual (gender and/or age group), and the like.

Furthermore, it is also possible to monitor available spaces on streets and in parking lots and notify the user of a location of an available space to park a car.

For example, in the case of the use in monitoring a store described above, the fog server 4 is assumed to be arranged for each monitoring target, such as being arranged in a store to be monitored together with each of the cameras 3. By providing the fog server 4 for each monitoring target such as a store in this manner, it becomes unnecessary for the cloud server 1 to directly receive transmission data from the plurality of cameras 3 in the monitoring target, and thus a processing load of the cloud server 1 is reduced.

It is noted that when there are a plurality of stores to be monitored and all of those stores belong to the same group, it is possible to provide one fog server 4 with respect to the plurality of stores instead of providing the fog server 4 for each store. In other words, the fog server 4 is not limited to being provided for each monitoring target, and it is also possible to provide one fog server 4 with respect to a plurality of monitoring targets.

It is noted that when the function of the fog server 4 can be provided to the cloud server 1 or the camera 3 side due to the reason that the cloud server 1 or the camera 3 side has a processing capacity, and/or the like, it is also possible to omit the fog server 4 from the information processing system 100 and directly connect each of the cameras 3 to the network 6, so that the cloud server 1 directly receives the transmission data from the plurality of cameras 3.

In descriptions below, the various apparatuses described above can be broadly categorized into a cloud-side information processing apparatus and an edge-side information processing apparatus.

The cloud server 1 and the management server 5 each correspond to the cloud-side information processing apparatus and belong to an apparatus group that provides a service that is assumed to be used by a plurality of users.

Further, the cameras 3 and the fog server 4 each correspond to the edge-side information processing apparatus and can be regarded as an apparatus group that is arranged in an environment prepared by a user who uses a cloud service.

It is noted that both the cloud-side information processing apparatus and the edge-side information processing apparatus may be provided in the same environment prepared by a user.

It is noted that the fog server 4 may be an on-premise server.

### <1-2. Registration of AI model and AI application>

As described above, in the information processing system 100, AI image processing is performed in the camera 3 as the edge-side information processing apparatus, and advanced application functions are realized in the cloud server 1 as the cloud-side information processing apparatus using result information of the AI image processing on the edge side (for example, result information of image recognition processing using AI).

Here, various methods are conceivable as a method of registering application functions in the cloud server 1 (or including the fog server 4) as the cloud-side information processing apparatus.

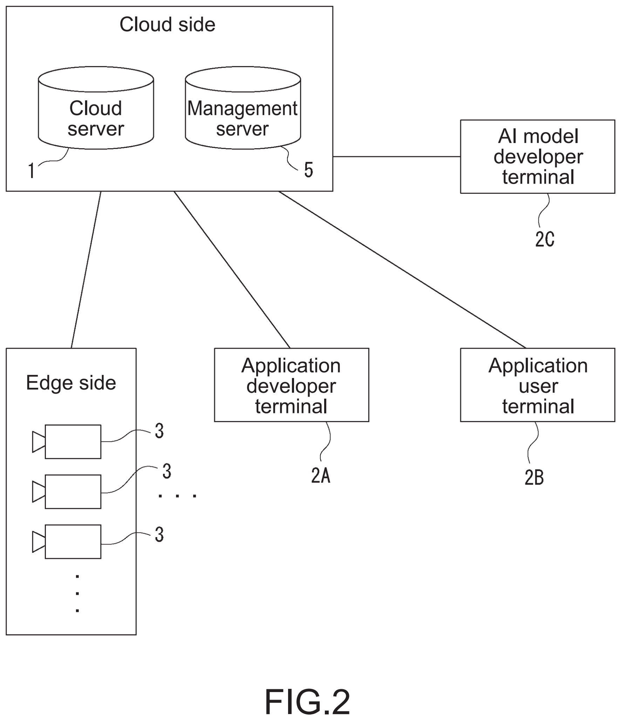

An example thereof will be described with reference to Fig. 2.

It is noted that although the illustration of the fog server 4 is omitted in Fig. 2, a configuration including the fog server 4 may also be used. In that case, the fog server 4 may assume some of the functions on the edge side.

The cloud server 1 and the management server 5 described above are information processing apparatuses that constitute an environment on the cloud side.

Further, the cameras 3 are information processing apparatuses that constitute an environment on the edge side.

It is noted that the camera 3 can be regarded as an apparatus including a control section that performs overall control of the camera 3, and also as an apparatus including another apparatus as an image sensor GS, that includes an arithmetic processing section that performs various types of processesing including the AI image processing on image data. In other words, the camera 3 as the edge-side information processing apparatus may be regarded as having mounted therein the image sensor GS as the another edge-side information processing apparatus.

Furthermore, the user terminals 2 used by users who use various services provided by the cloud-side information processing apparatuses include an application developer terminal 2A used by a user who develops an application used in the AI image processing, an application user terminal 2B used by a user who uses an application, an AI model developer terminal 2C used by a user who develops an AI model used in the AI image processing, and the like.

It is noted that of course, the application developer terminal 2A may also be used by a user who develops an application that does not use the AI image processing.

Learning data sets for performing learning using AI are prepared in the cloud-side information processing apparatus. A user who develops an AI model communicates with the cloud-side information processing apparatus using the AI model developer terminal 2C and downloads these learning data sets. At this time, the learning data set may be provided for a fee. For example, the AI model developer may purchase a learning data set by registering personal information in a marketplace prepared as a function on the cloud side (e-marketplace) so as to enable various functions and materials registered in the marketplace to be purchased.

After developing an AI model using the learning data set, the AI model developer registers the developed AI model in the marketplace using the AI model developer terminal 2C. Thus, an incentive may be paid to the AI model developer when the AI model is downloaded.

Furthermore, a user who develops an application downloads an AI model from the marketplace using the application developer terminal 2A, and develops an application using the AI model (hereinafter, will be referred to as an "AI application"). At this time, an incentive may be paid to the AI model developer as described above.

The application development user registers the developed AI application in the marketplace using the application developer terminal 2A. Thus, an incentive may be paid to the user who has developed the AI application when the AI application is downloaded.

A user who uses an AI application uses the application user terminal 2B to perform an operation to deploy the AI application and the AI model from the marketplace to the camera 3 as the edge-side information processing apparatus that the user manages. At this time, an incentive may be paid to the AI model developer.

This makes it possible to perform the AI image processing using the AI application and the AI model in the camera 3, and to not only capture images but also perform detection of customers and detection of vehicles by the AI image processing.

Here, the deployment of the AI application and AI model refers to installment of the AI application and AI model in a target (apparatus) as an execution entity so that the target as the execution entity can use the AI application and AI model, that is, so that at least a part of a program as the AI application can be executed.

Furthermore, in the camera 3, attribute information of customers may be extracted from image data captured by the camera 3 using the AI image processing.

These pieces of attribute information are transmitted from the camera 3 to the cloud-side information processing apparatus via the network 6.

A cloud application is deployed on the cloud-side information processing apparatus, and each user can use the cloud application via the network 6. In the cloud application, an application for analyzing flow lines of customers using the attribute information and/or image data of the customers, and the like are prepared. Such a cloud application is uploaded by the application development user and/or the like.

By using the cloud application for a flow line analysis using the application user terminal 2B, the application user can perform the flow line analysis of customers visiting his/her own store and view an analysis result. Viewing of the analysis result is performed by, for example, graphically presenting the flow lines of customers on a store map.

Further, the result of the flow line analysis may be displayed in a form of a heat map, and the analysis result may be viewed by presenting a density of customers, and/or the like.

Furthermore, those pieces of information may be sorted for each attribute information of customers for display.

In the cloud-side marketplace, AI models optimized for each user may be registered. For example, image data acquired by the camera 3 arranged in a store managed by a certain user is uploaded and accumulated as appropriate in the cloud-side information processing apparatus.

In the cloud-side information processing apparatus, processing of performing AI model relearning processing every time a certain number of pieces of uploaded image data are accumulated so that the AI model is updated and re-registered in the marketplace is executed.

It is noted that the AI model relearning processing may be set to be selectable by the user as an option on the marketplace, for example.

For example, by deploying an AI model that has been relearned using a dark image from the camera 3 arranged in the store on the camera 3, it is possible to improve a recognition rate and/or the like of image processing for image data captured in dark places. In addition, by deploying an AI model that has been relearned using a bright image from the camera 3 arranged outside the store on the camera 3, it is possible to improve the recognition rate and/or the like of image processing for images captured in bright places.

In other words, by redeploying an updated AI model on the camera 3 again, the application user can obtain optimized processing result information at all times.

In this manner, the application user may generate an AI model specialized for his/her own store by using the AI model learning service provided by the cloud-side information processing apparatus as an AI model development user. That is, image data captured by the camera 3 arranged in his/her own store may be used as relearning data for a general-purpose AI model, to recreate the AI model into an AI model specialized for each store.

Moreover, when the plurality of cameras 3 are arranged in a store, learning that uses image data captured by each of the cameras 3 may be performed so that the AI model is specialized for each of the cameras 3.

When information to be uploaded from the camera 3 to the cloud-side information processing apparatus (image data and/or the like) includes personal information, data from which privacy-related information has been deleted may be uploaded in view of privacy protection, or data from which privacy-related information has been deleted may be made available to the AI model development user and/or the application development user.

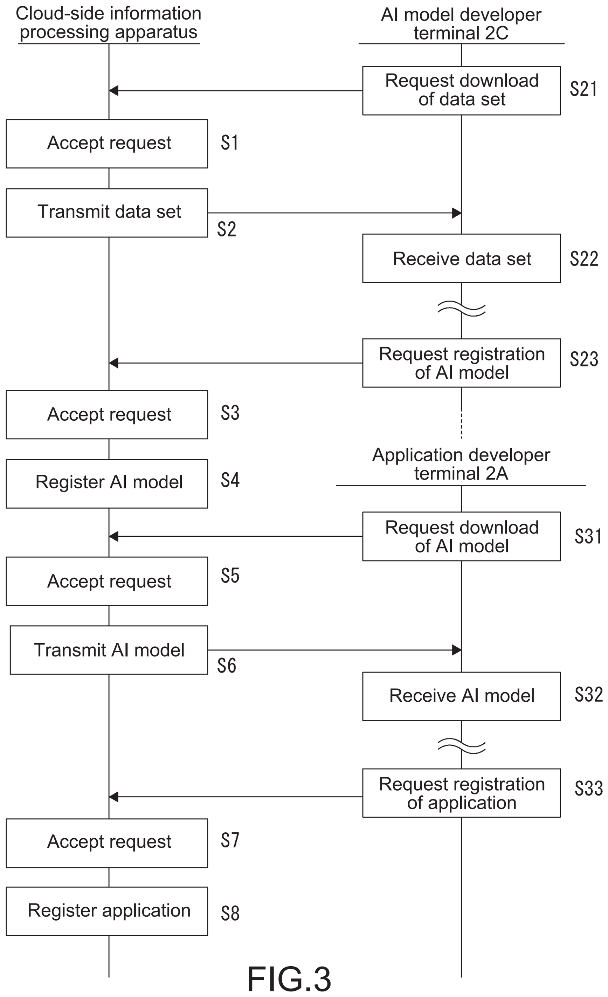

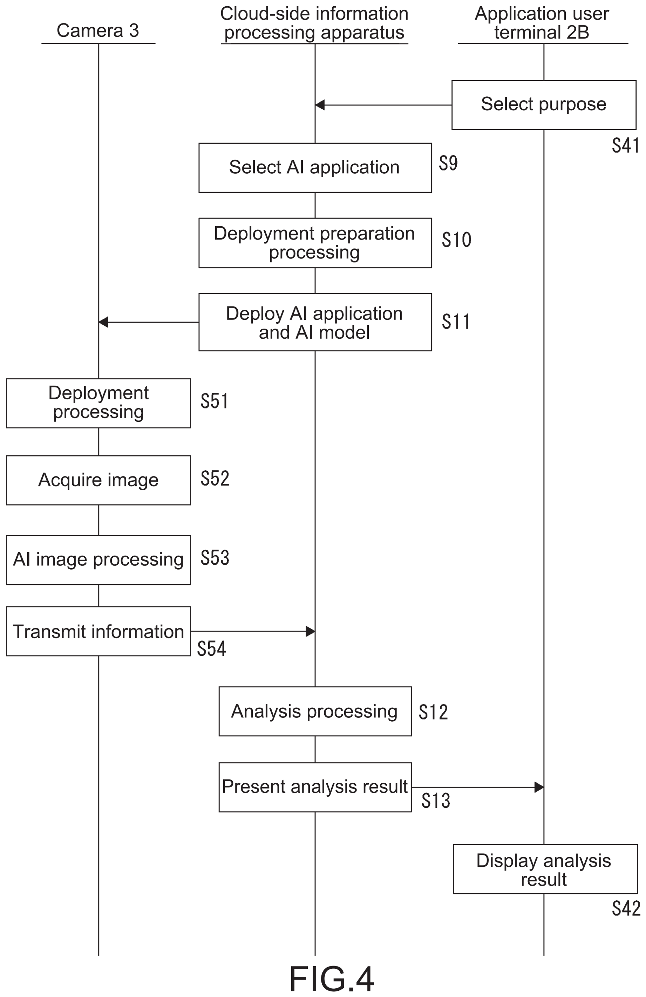

The flow of the processing described above is shown in the flowcharts of Figs. 3 and 4.

It is noted that the cloud-side information processing apparatus corresponds to the cloud server 1 and the management server 5 shown in Fig. 1, and the like.

In accordance with the AI model developer viewing a list of data sets registered in the marketplace and selecting a desired data set using the AI model developer terminal 2C including a display section constituted of an LCD (Liquid Crystal Display), an organic EL (Electro Luminescence) panel, or the like, the AI model developer terminal 2C transmits a download request for the selected data set to the cloud-side information processing apparatus in Step S21.

In response to this, the cloud-side information processing apparatus accepts the request in Step S1, and performs processing of transmitting the requested data set to the AI model developer terminal 2C in Step S2.

In Step S22, the AI model developer terminal 2C performs processing of receiving the data set. This enables the AI model developer to develop an AI model using the data set.

After the AI model developer finishes developing the AI model, the AI model developer performs an operation to register the developed AI model in the marketplace (for example, designation of a name of the AI model, an address where the AI model is located, and/or the like). Then, in Step S23, the AI model developer terminal 2C transmits a request to register the AI model in the marketplace to the cloud-side information processing apparatus.

In response to this, the cloud-side information processing apparatus accepts the registration request in Step S3, and performs registration processing of the AI model in Step S4, so that the AI model can be displayed on the marketplace, for example. This enables users other than the AI model developer to download the AI model from the marketplace.

For example, the application developer who is to develop an AI application views a list of AI models registered in the marketplace using the application developer terminal 2A. In accordance with an operation made by the application developer (for example, an operation of selecting one of the AI models on the marketplace), the application developer terminal 2A transmits a download request for the selected AI model to the cloud-side information processing apparatus in Step S31.

The cloud-side information processing apparatus accepts the request in Step S5, and transmits the AI model to the application developer terminal 2A in Step S6.

In Step S32, the application developer terminal 2A receives the AI model. This enables the application developer to develop an AI application that uses an AI model developed by another person.

After the application developer finishes developing the AI application, the application developer performs an operation to register the AI application in the marketplace (for example, an operation to designate a name of the AI application, an address where the AI application is located, and/or the like). Then, in Step S33, the application developer terminal 2A transmits a registration request for the AI application to the cloud-side information processing apparatus.

The cloud-side information processing apparatus accepts the registration request in Step S7, and registers the AI application in Step S8, so that the AI application can be displayed on the marketplace, for example. This enables users other than the application developer to select the AI application on the marketplace and download the AI application.

As shown in Fig. 4, for example, a user who intends to use an AI application selects a purpose in the application user terminal 2B in Step S41. In the purpose selection, the selected purpose is transmitted to the cloud-side information processing apparatus.

In response to this, the cloud-side information processing apparatus selects an AI application corresponding to the purpose in Step S9, and performs preparation processing (deployment preparation processing) for deploying the AI application and/or AI model on each apparatus in Step S10.

In the deployment preparation processing, the determination of the AI model or the like is performed based on information on an apparatus set as a target of the deployment processing of the AI model and/or AI application, examples of the information including information on the camera 3 and/or the fog server 4, performance required by the user, and the like.

In addition, in the deployment preparation processing, which apparatus is to execute an SW (Software) component constituting the AI application for realizing a function desired by the user is determined based on performance information of each apparatus and user requirement information.

Each of the SW components may be a container to be described later, or may be a microservice. It is noted that the SW components can also be realized using a WebAssembly technology.

An AI application that counts the number of customers visiting a store for each attribute such as a gender and an age includes an SW component that uses an AI model to detect faces of people from image data, an SW component that extracts attribute information of the people from the face detection result, an SW component that tallies up the results, an SW component that visualizes the tallied result, and the like.

The deployment preparation processing will be described again later using some examples.

In Step S11, the cloud-side information processing apparatus performs processing of deploying the SW components on the respective apparatuses. In this processing, the AI application and the AI model are transmitted to the respective apparatuses such as the camera 3.

In response to this, in the camera 3, the deployment processing of the AI application and the AI model is performed in Step S51. This makes it possible to perform the AI image processing on the obtained image data in the camera 3.

It is noted that although not shown in Fig. 4, the deployment processing of the AI application and the AI model is also similarly performed in the fog server 4 as necessary.

However, when all of the processing is executed in the camera 3, the deployment processing with respect to the fog server 4 is not performed.

In Step S52, the camera 3 performs an image pickup operation to acquire an image. Then, in Step S53, the camera 3 performs the AI image processing on the obtained image to obtain, for example, an image recognition result.

In Step S54, the camera 3 performs transmission processing to transmit the image data and the result information of the AI image processing. In the transmission of the information in Step S54, both the image data and the result information of the AI image processing may be transmitted, or only one of them may be transmitted.

The cloud-side information processing apparatus that has received these pieces of information performs analysis processing in Step S12. By this analysis processing, the flow line analysis of customers visiting a store, vehicle analysis processing for traffic monitoring, and the like are performed.

In Step S13, the cloud-side information processing apparatus performs analysis result presentment processing. This processing is realized by the user using the cloud application described above, for example.

As a result of the analysis result presentment processing, the application user terminal 2B performs processing of displaying the analysis result on a monitor or the like in Step S42.

By the processing up to this point, the user who is a user of the AI application can obtain an analysis result corresponding to the purpose selected in Step S41.

It is noted that in the cloud-side information processing apparatus, the AI model may be updated after Step S13. By the update and deployment of the AI model, it becomes possible to obtain an analysis result suited for the usage environment of the user.

### <1-3. General outline of functions of system>

In the present embodiment, as a service that uses the information processing system 100, a service with which the user as a customer can select a type of function for the AI image processing of each camera 3 is assumed. As the selection of the type of function, for example, the image recognition function, the image detection function, and/or the like may be selected, or a more detailed type may be selected so as to exert the image recognition function and/or the image detection function for a specific subject.

For example, as a business model, the service provider sells the camera 3 and the fog server 4 having the image recognition function using AI to a user who then intalls those camera 3 and fog server 4 at a location to be monitored. Then, a service that provides the analysis information to the user as described above is deployed.

At this time, since uses required for the system differ for each client, such as a use in monitoring a store or a use in traffic monitoring, it is possible to selectively set the AI image processing function of the camera 3 so that analysis information corresponding to the use that the customer requires can be obtained.

In the present example, the management server 5 has such a function of selectively setting the AI image processing function of the camera 3.

It is noted that the function of the management server 5 may be given to the cloud server 1 and/or the fog server 4.

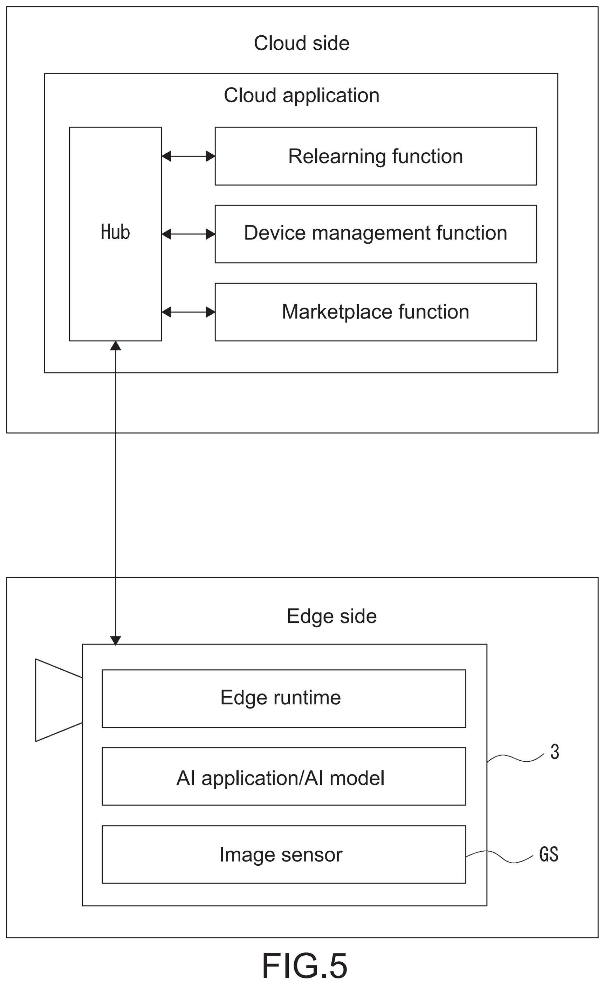

Here, the connection between the cloud server 1 or the management server 5 as the cloud-side information processing apparatus and the camera 3 as the edge-side information processing apparatus will be described with reference to Fig. 5.

The relearning function, the device management function, and the marketplace function, which are functions that can be used via the Hub, are realized in the cloud-side information processing apparatus.

The Hub performs highly reliable communication that is protected by security with the edge-side information processing apparatus. Accordingly, various functions can be provided to the edge-side information processing apparatus.

The relearning function is a function of performing relearning to provide a newly optimized AI model, and with this, an appropriate AI model that is based on a new learning material is provided.

The device management function is a function of managing the camera 3 and/or the like as the edge-side information processing apparatus, and can provide a function of managing and monitoring an AI model deployed on the camera 3, a function of detecting a problem, a troubleshooting function, and/or the like.

Further, the device management function is also a function of managing information of the camera 3 and the fog server 4. The information of the camera 3 and the fog server 4 includes information of a chip used as the arithmetic processing section, information of a memory capacity, a storage capacity, a usage rate of a CPU and/or a memory, and/or the like, information of software installed in each apparatus, such as an OS (Operating System), and the like.

In addition, the device management function is used to protect secure accesses by authenticated users.

The marketplace function provides the function described above for registering an AI model developed by the AI model developer and an AI application developed by the application developer, a function of deploying those developments on permitted edge-side information processing apparatuses, and the like. The marketplace function also provides a function related to the payment of an incentive according to the deployment of the developments.

The camera 3 as the edge-side information processing apparatus includes an edge runtime, the AI application, the AI model, and the image sensor GS.

The edge runtime functions as embedded software for performing management of an application deployed on the camera 3 and communication with the cloud-side information processing apparatus, and/or the like.

As described above, the AI model is a deployment of an AI model registered in the marketplace in the cloud-side information processing apparatus. Thus, the camera 3 can obtain result information of the AI image processing, that corresponding to the purpose, using image data.

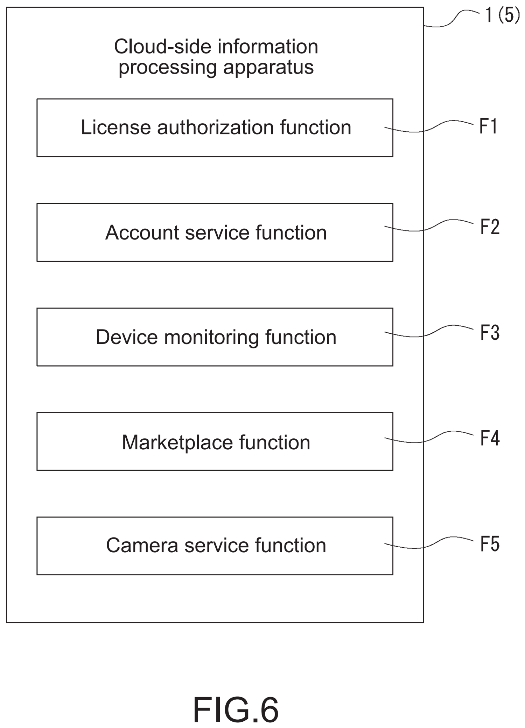

A general outline of the functions of the cloud-side information processing apparatus will be described with reference to Fig. 6. It is noted that the cloud-side information processing apparatus is a collective term for the apparatuses including the cloud server 1, the management server 5, and the like.

As shown in the figure, the cloud-side information processing apparatus has a license authorization function F1, an account service function F2, a device monitoring function F3, a marketplace function F4, and a camera service function F5.

The license authorization function F1 is a function of performing various types of processing related to authentication. Specifically, the license authorization function F1 is used to perform processing related to device authentication of each of the cameras 3 and processing related to authentication of each of an AI model, software, and firmware used in the camera 3.

Here, the software described above refers to software requisite for appropriately realizing the AI image processing in the camera 3.

For the AI image processing that is based on image data to be performed appropriately and for the result of the AI image processing to be transmitted to the fog server 4 and the cloud server 1 in an appropriate format, it is necessary to control the data input to the AI model and appropriately process output data of the AI model. The software described above is software that includes peripheral processing requisite for appropriately realizing the AI image processing. Such software is software for realizing desired functions using the AI model, and corresponds to the AI application described above.

It is noted that the AI application is not limited to an application that uses only one AI model, and an application that uses two or more AI models may also be used. For example, there may exist an AI application that includes a flow of processing in which information on a recognition result obtained by an AI model that executes the AI image processing using image data as input data (image data and/or the like; hereinafter, will be referred to as "recognition result information") is input to another AI model so as to cause second AI image processing to be performed.

In the license authorization function F1, for the authentication of the camera 3, processing of issuing a device ID (Identification) is performed for each camera 3 when the camera 3 is connected via the network 6.

Also for the authentication of the AI model and/or software, processing of issuing a unique ID (AI model ID, software ID) is performed for each of the AI application and AI model for which registration has been requested from the application developer terminal 2A and/or the AI model developer terminal 2C.

Also in the license authorization function F1, processing of issuing various keys, certificates, and the like for enabling secure communication to be performed between the camera 3, the application developer terminal 2A, and/or the AI model developer terminal 2C and the cloud server 1, to a manufacturer of the camera 3 (in particular, a manufacturer of the image sensor GS to be described later), the AI model developer, and the AI application developer is performed, and processing of updating and suspending the validity of the certification is also performed.

In addition, in the license authorization function F1, when user registration (registration of account information involving issuance of a user ID) is performed by the account service function F2 to be described below, processing of linking the camera 3 (the device ID described above) purchased by the user with the user ID is also performed.

The account service function F2 is a function of generating and managing user account information. In the account service function F2, an input of user information is accepted, and account information is generated based on the input user information (performs generation of account information including at least user ID and password information).

In addition, in the account service function F2, registration processing (registration of account information) for the AI model developer and/or the AI application developer is also performed.

The device monitoring function F3 is a function of performing processing for monitoring a usage state of the camera 3. For example, regarding various elements related to the usage state of the camera 3, such as a usage location of the camera 3, an output frequency of output data of the AI image processing, and a free space of a CPU and/or a memory used in the AI image processing, monitoring of information on a usage rate of the CPU and/or the memory described above, and/or the like is performed.

The marketplace function F4 is a function for selling AI models and AI applications. For example, a user can purchase an AI application and an AI model used in the AI application via a sales website (sales site) provided by the marketplace function F4. In addition, the AI application developer can purchase an AI model for creating an AI application via the sales site described above.

The marketplace function F4 provides a function for providing applications to solve problems that users have.

For example, the marketplace function F4 presents to the user, as an aid for introducing an application into the user environment, a screen for inputting a user requirement, a screen for selecting a system configuration, and a screen for selecting a combination of the device constituting the system and the SW component to be deployed.

In other words, the marketplace function F4 functions as a display control section that causes a display section of the user terminal 2 to display various screens, thereby assisting the user in using the marketplace function and introducing a system.

It is noted that each of the screens will be described again later.

The camera service function F5 is a function for providing a service related to the use of the camera 3 to the user.

One example of this camera service function F5 is the function related to the generation of analysis information described above. That is, the camera service function F5 is a function of performing processing of generating analysis information of a subject based on processing result information of the image processing in the camera 3, and causing the generated analysis information to be viewed by the user via the user terminal 2.

Further, the camera service function F5 also includes a function of detecting a drift of the AI model deployed on the camera 3. Here, the drift refers to a phenomenon in which precision of an inference result of an AI model is lowered, an example of which is a phenomenon in which precision of a gender estimation result on a subject is lowered due to changes in fashion trends or makeup trends of people.

The camera service function F5 detects a drift for each AI model, and when the drift becomes large, proposes or implements replacement or relearning of the AI model.

It is noted that the drift is detected by analyzing a change in likelihood information that is output from the AI model together with the inference result. For example, an occurrence of a drift is detected when the likelihood of the inference result is lowered.

The camera service function F5 also has a processing sharing determination function. In the processing sharing determination function, when deploying an AI application on the edge-side information processing apparatus, processing of determining a deployment destination apparatus in SW component units is performed as the deployment preparation processing described above. It is noted that some of the SW components may be determined to be executed in the cloud-side apparatus, and in this case, the deployment processing does not need to be performed as having already been deployed on the cloud-side apparatus.

For example, as in the example described above, in the case of the AI application including the SW component that detects a face of a person, the SW component that extracts attribute information of the person, the SW component that tallies extraction results, and the SW component that visualizes the tallied result, the camera service function F5 determines the image sensor GS of the camera 3 as the deployment destination apparatus for the SW component that detects a face of a person, determines th ecamera 3 as the deployment destination apparatus for the SW component that extracts attribute information of the person, determines the fog server 4 as the deployment destination apparatus for the SW component that tallies extraction results, and determines that the SW component that visualizes the tallied result is to be executed on the cloud server 1 without being newly deployed on the apparatus.

In this manner, the sharing of processing in the respective apparatuses is determined by determining the deployment destination of each of the SW components.

It is noted that these determinations are made while taking into consideration the specification and performance of each apparatus and also the requirements of users.

With the drift detection function as described above, the AI model can be updated so that a favorable result of the AI image processing can be obtained continuously.

In addition, with the processing sharing determination function, it becomes possible for that AI image processing and analysis processing therefor to be performed in an appropriate apparatus.

Here, the descriptions above have exemplified the configuration in which the license authorization function F1, the account service function F2, the device monitoring function F3, the marketplace function F4, and the camera service function F5 are realized by the the cloud server 1 alone, but a configuration that realizes these functions by sharing the functions among the plurality of information processing apparatuses is also possible. For example, a configuration in which one information processing apparatus assumes one of the functions described above is conceivable. Alternatively, it is also possible for the plurality of information processing apparatuses (for example, the cloud server 1 and the management server 5) to share a single function out of the functions described above.

In Fig. 1, the AI model developer terminal 2C is an information processing apparatus used by the AI model developer.

Further, the application developer terminal 2A is an information processing apparatus used by the AI application developer.

### <1-4. Configuration of camera>

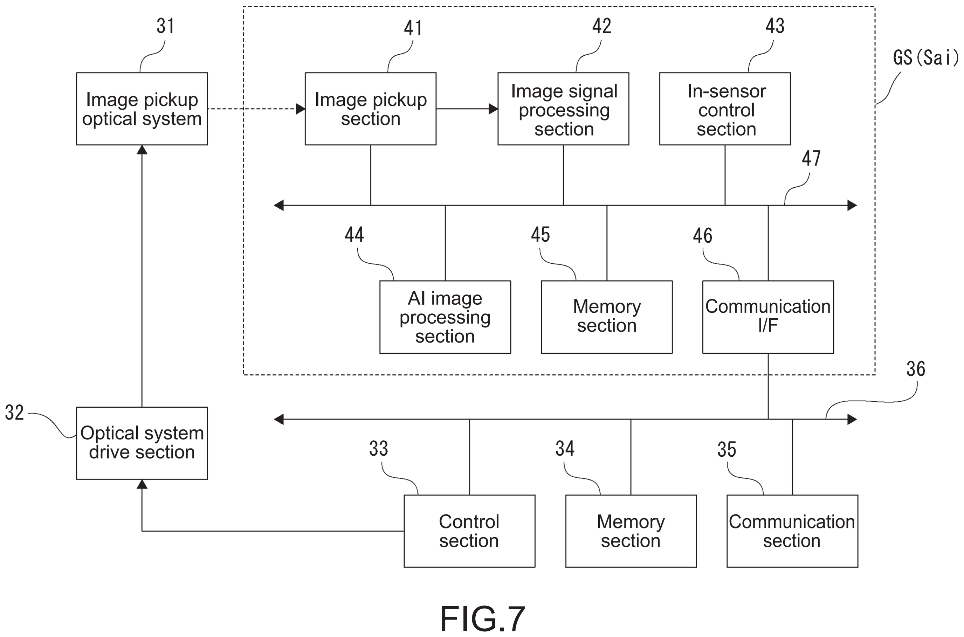

Fig. 7 is a block diagram showing an internal configuration example of the camera 3.

As shown in the figure, the camera 3 includes an image pickup optical system 31, an optical system drive section 32, the image sensor GS, a control section 33, a memory section 34, and a communication section 35. The image sensor GS, the control section 33, the memory section 34, and the communication section 35 are connected via a bus 36 and are capable of performing data communication with one another.

The image pickup optical system 31 includes lenses such as a cover lens, a zoom lens, and a focus lens, and a diaphragm (iris) mechanism. Light (incident light) from a subject is guided by the image pickup optical system 31 and collected on a light-receiving surface of the image sensor GS.

The optical system drive section 32 is a collective term for the drive sections of the zoom lens, the focus lens, and the diaphragm mechanism included in the image pickup optical system 31. Specifically, the optical system drive section 32 includes actuators for driving these zoom lens, focus lens, and diaphragm mechanism, respectively, and drive circuits for the actuators.

The control section 33 is configured to include, for example, a microcomputer including a CPU, a ROM, and a RAM, and the CPU executes various types of processing in accordance with programs stored in the ROM and programs loaded into the RAM, to perform overall control of the camera 3.

Further, the control section 33 instructs the optical system drive section 32 to drive the zoom lens, the focus lens, the diaphragm mechanism, and the like. In response to these drive instructions, the optical system drive section 32 executes movements of the focus lens and the zoom lens, opening and closing of aperture blades of the diaphragm mechanism, and the like.

Furthermore, the control section 33 performs control of writing and reading of various types of data to/from the memory section 34.

The memory section 34 is a non-volatile storage device such as an HDD (Hard Disk Drive) or a flash memory device, and is used as a save destination (recording destination) of image data output from the image sensor GS.

Furthermore, the control section 33 performs various types of data communication with external apparatuses via the communication section 35. The communication section 35 in the present example is configured to be capable of performing data communication with at least the fog server 4 (or the cloud server 1) shown in Fig. 1.

The image sensor GS is configured as, for example, an image sensor of a CCD type, a CMOS type, or the like, the distance measurement sensor, EVS, thermo sensor, spectroscopic sensor, or polarization sensor described above, or the like. In descriptions below, the image sensor GS that generates a color image or a monochrome image will be taken as an example.

The image sensor GS includes an image pickup section 41 as a sensor section, an image signal processing section 42, an in-sensor control section 43, an AI image processing section 44, a memory section 45, and a communication I/F 46, which are capable of performing data communication with one another via a bus 47.

The image pickup section 41 includes a pixel array section in which pixels including photoelectric conversion elements such as photodiodes are arranged two-dimensionally, and a readout circuit that reads out an electric signal obtained by the photoelectric conversion from each of the pixels included in the pixel array section, and is capable of outputting the electric signal as a pickup image signal.

The readout circuit executes, for example, CDS (Correlated Double Sampling) processing, AGC (Automatic Gain Control) processing, and/or the like on the electric signal obtained by the photoelectric conversion, and further performs A/D (Analog/Digital) conversion processing.

The image signal processing section 42 performs pre-processing, concurrent processing, YC generation processing, resolution conversion processing, codec processing, and/or the like on the pickup image signal as digital data obtained after the A/D conversion processing.

In the pre-processing, clamp processing for clamping a black level of R, G, and B to a predetermined level, correction processing among R, G, and B color channels, and/or the like are performed on the pickup image signal. In the concurrent processing, color separation processing is performed so that the image data for each pixel includes all color components of R, G, and B. For example, in a case of an image pickup element that uses a Bayer array color filter, demosaic processing is performed as the color separation processing. In the YC generation processing, a luminance (Y) signal and a color (C) signal are generated (separated) from the R, G, B image data. In the resolution conversion processing, resolution conversion processing is performed on image data that has been subjected to various types of signal processing.

In the codec processing, for example, encoding processing and file generation for recording and/or communication are performed on the image data that has been subjected to the various types of processing described above. In the codec processing, it is possible to generate files in formats of MPEG-2 (MPEG: Moving Picture Experts Group), H.264, and the like as moving image file formats. Further, it is also possible to generate files in formats of JPEG (Joint Photographic Experts Group), TIFF (Tagged Image File Format), GIF (Graphics Interchange Format), and the like as still image files.

The in-sensor control section 43 instructs the image pickup section 41 to perform execution control of image pickup operations. Similarly, the in-sensor control section 43 also performs execution control of processing with respect to the image signal processing section 42.

The AI image processing section 44 performs image recognition processing as the AI image processing on the image data.

The image recognition function that uses AI can be realized by using a programmable arithmetic processing apparatus such as a CPU, an FPGA (Field Programmable Gate Array), or a DSP (Digital Signal Processor).

The image recognition function that can be realized by the AI image processing section 44 can be switched by changing an algorithm of the AI image processing. In other words, the function type of the AI image processing can be switched by switching the AI model used in the AI image processing. There are various function types in the AI image processing, and examples thereof include the types exemplified below.
Class identification
Semantic segmentation
Person detection
Vehicle detection
Target tracking
OCR (Optical Character Recognition)

Of the function types described above, class identification is a function of identifying a class of a target. The "class" used herein refers to information representing a category of an object, and distinguishes, for example, "person", "automobile", "plane", "ship", "truck", "bird", "cat", "dog", "deer", "frog", "horse", and the like from one another.

Target tracking is a function of tracking a target subject, and can be said to be a function of obtaining history information of a position of the subject.

The memory section 45 is used as a save destination for the various types of data such as image data obtained by the image signal processing section 42. Further, in the present example, the memory section 45 can also be used for temporarily storing data used by the AI image processing section 44 during the process of the AI image processing.

The memory section 45 also stores information on the AI application and the AI model used by the AI image processing section 44.

It is noted that the information on the AI application and AI model may be deployed on the memory section 45 as a container or the like using the container technology to be described later, or may be deployed using a microservice technology. By deploying the AI model used in the AI image processing on the memory section 45, it is possible to change the function type of the AI image processing or make a change to an AI model whose performance has been improved by relearning.

It is noted that as described above, in the present embodiment, the descriptions have been made based on the example of the AI model and the AI application used for the image recognition, but the present technology is not limited to this, and a program that is executed using the AI technology and/or the like may be the target.

Further, when the capacity of the memory section 45 is small, the information on the AI application and the AI model may be deployed in a memory outside the image sensor GS, such as the memory section 34, as a container or the like using the container technology, and then only the AI model may be stored in the memory section 45 in the image sensor GS via the communication I/F 46 to be described below.

The communication I/F 46 is an interface that performs communication with the control section 33, the memory section 34, and the like provided outside the image sensor GS. The communication I/F 46 performs communication for acquiring, from outside, the program to be executed by the image signal processing section 42, the AI application and/or AI model used by the AI image processing section 44, and the like, and stores them in the memory section 45 provided in the image sensor GS.

As a result, the AI model is stored in a part of the memory section 45 provided in the image sensor GS so as to be available for use by the AI image processing section 44.

The AI image processing section 44 uses the AI application and/or AI model obtained in this manner to perform predetermined image recognition processing, to thus recognize a subject according to the purpose.

The recognition result information of the AI image processing is output to the outside of the image sensor GS via the communication I/F 46.

That is, not only the image data output from the image signal processing section 42 but also the recognition result information of the AI image processing is output from the communication I/F 46 of the image sensor GS.

It is noted that it is also possible to cause the communication I/F 46 of the image sensor GS to output only one of the image data or the recognition result information.

For example, when using the AI model relearning function described above, image data used in the relearning function is uploaded from the image sensor GS to the cloud-side information processing apparatus via the communication I/F 46 and the communication section 35.

In addition, when performing inference using an AI model, recognition result information of the AI image processing is output from the image sensor GS to another information processing apparatus outside the camera 3 via the communication I/F 46 and the communication section 35.

Various configurations are conceivable for the image sensor GS. Here, descriptions will be given on an example in which the image sensor GS has a two-layer structure.

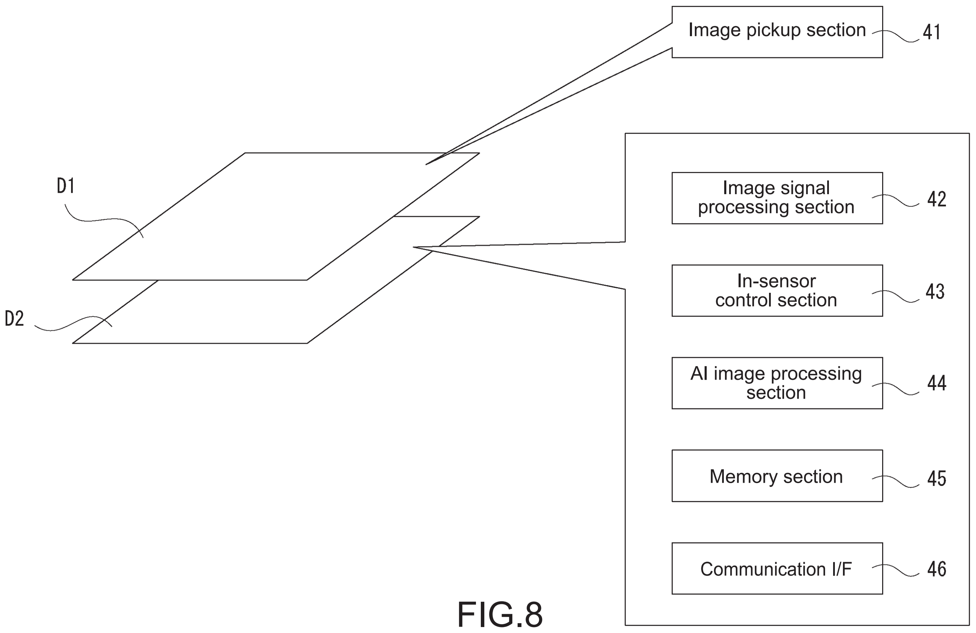

As shown in Fig. 8, the image sensor GS is configured as a one-chip semiconductor apparatus in which two dies are stacked.

The image sensor GS is configured by stacking a die D1 having the function as the image pickup section 41 shown in Fig. 7 and a die D2 including the image signal processing section 42, the in-sensor control section 43, the AI image processing section 44, the memory section 45, and the communication I/F 46.

The die D1 and the die D2 are electrically connected by, for example, Cu-Cu bonding.

Various methods are conceivable as the method of deploying an AI model, an AI application, and the like on the camera 3. As an example, an example that uses the container technology will be described.

In this manner, the image sensor GS becomes a one-chip AI sensor Sai that is capable of executing the AI image processing by the deployment of an AI model.

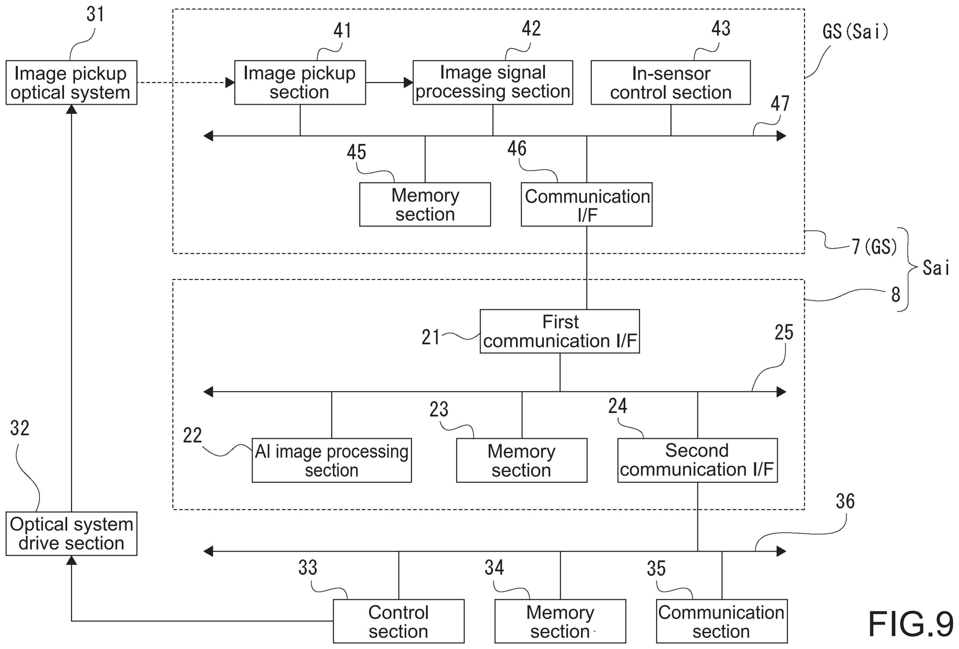

Without being limited to this, the AI sensor Sai may be constituted of two or more chips. Specifically, the AI sensor Sai may be configured to include a sensor chip 7 including a storage area (memory section 45) not having enough capacity for deploying an AI model and an AI image processing chip 8 that is enabled to perform the AI image processing on image data output from the sensor chip 7 by the deployment of the AI model (see Fig. 9).

That is, the AI sensor Sai is constituted of the sensor chip 7 (image sensor GS) and the AI image processing chip 8. The sensor chip 7 has a configuration equivalent to that of the image sensor GS shown in Fig. 7 except that the AI image processing section 44 is not provided. It is noted that the communication I/F 46 of the sensor chip 7 is an interface for communicating with the AI image processing chip 8.

In the AI image processing chip 8, a first communication I/F 21, an AI image processing section 22, a memory section 23, and a second communication I/F 24 are capable of performing data communication with one another via a bus 25.

The first communication I/F 21 of the AI image processing chip 8 is an interface for communicating with the sensor chip 7. The AI image processing chip 8 receives an input of image data output from the sensor chip 7 via the first communication I/F 21.

The AI image processing section 22 performs image recognition processing as the AI image processing on the image data, and has a function similar to that of the AI image processing section 44 shown in Fig. 7.

It is noted that the AI image processing section 22 may also execute image processing for generating input data (input tensor) to be input to the AI model.

The memory section 23 stores various types of data used by the AI image processing section 22 in the AI image processing and information on AI applications and AI models.

The second communication I/F 24 performs communication for acquiring an AI application, an AI model, and/or the like to be used by the AI image processing section 22 from the outside, and stores them in the memory section 23 included in the AI image processing chip 8. That is, the second communication I/F 24 is an interface for communicating with the control section 33 and the like outside the AI sensor Sai.

By using the AI sensor Sai having two or more chips in this manner, a general-purpose sensor not having the AI image processing function can be used as the sensor chip 7 (image sensor GS). Therefore, it becomes possible to reduce costs as compared to a case of using a dedicated one-chip AI sensor Sai.

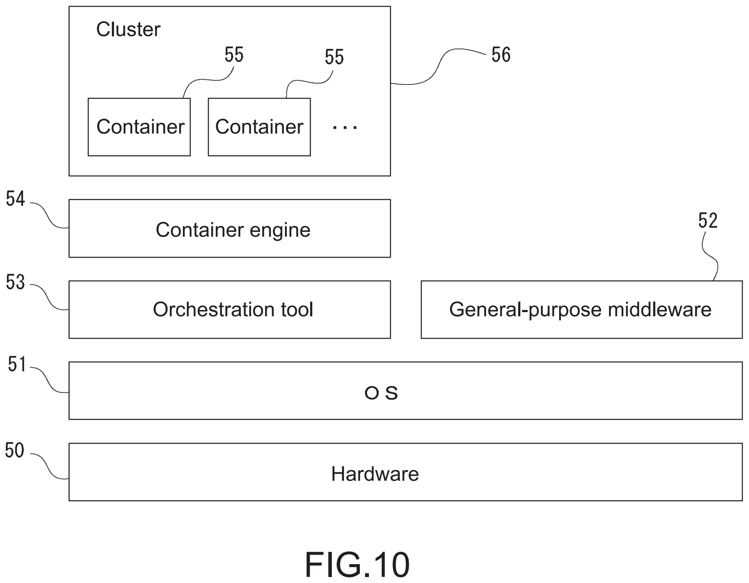

In the camera 3, an operation system 51 is installed on various types of hardware 50 such as a CPU, a GPU (Graphics Processing Unit), a ROM, and a RAM as the control section 33 shown in Fig. 7 (see Fig. 10).

The operation system 51 is basic software that performs overall control of the camera 3 to realize various functions in the camera 3.

General-purpose middleware 52 is installed on the operation system 51.

The general-purpose middleware 52 is software for realizing basic operations of a communication function that uses the communication section 35 as the hardware 50, a display function that uses a display section (monitor or the like) as the hardware 50, and the like.

Not only the general-purpose middleware 52 but also an orchestration tool 53 and a container engine 54 are installed on the operation system 51.

The orchestration tool 53 and the container engine 54 deploy and execute the container 55 by constructing a cluster 56 as an operation environment of the container 55.

It is noted that the edge runtime shown in Fig. 5 corresponds to the orchestration tool 53 and the container engine 54 shown in Fig. 10.

The orchestration tool 53 has a function for causing the container engine 54 to appropriately allocate resources of the hardware 50 and the operation system 51 described above. By the orchestration tool 53, the containers 55 are grouped into a predetermined unit called pod to be described later, and each of the pods is deployed on a worker node (to be described later) that is a logically different area.

The container engine 54 is one of the middleware installed in the operation system 51, and is an engine for operating the container 55. Specifically, the container engine 54 has a function of allocating the resources (the memory, computing power, and the like) of the hardware 50 and the operation system 51 to the container 55 based on a setting file and/or the like provided in the middleware in the container 55.

In addition, the resources allocated in the present embodiment include not only resources of the control section 33 provided in the camera 3, and the like, but also resources of the in-sensor control section 43, the memory section 45, the communication I/F 46, and the like provided in the image sensor GS.

The container 55 is configured to include applications for realizing predetermined functions and middleware such as a library.

The container 55 operates to realize the predetermined functions using the resources of the hardware 50 and the operation system 51 allocated by the container engine 54.

In the present embodiment, the AI application and the AI model shown in Fig. 5 correspond to one of the containers 55. That is, one of the various containers 55 deployed on the camera 3 realizes a predetermined AI image processing function that uses the AI application and the AI model.

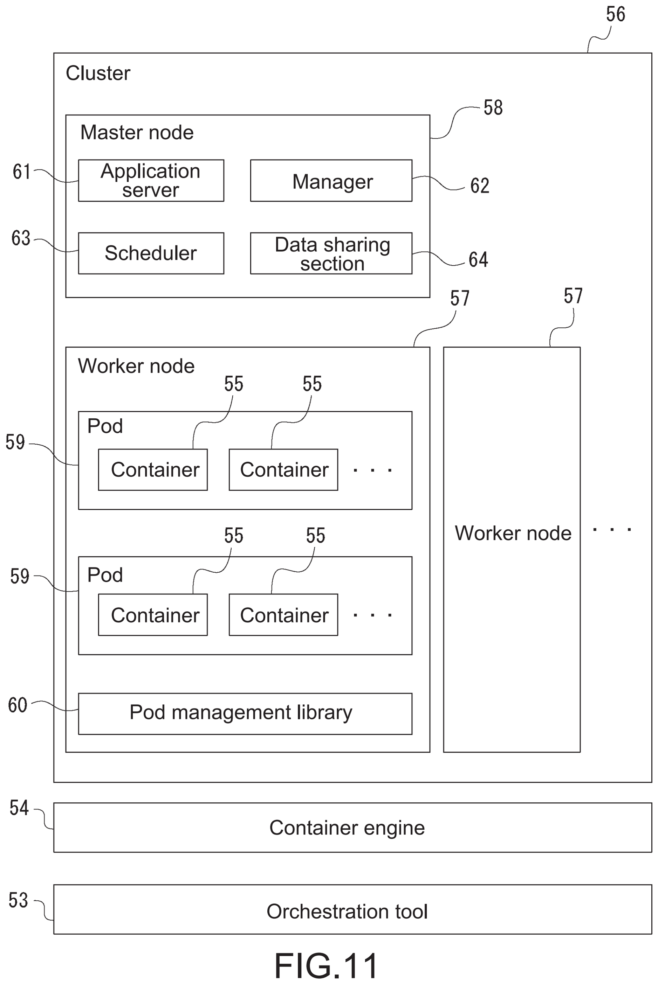

A specific configuration example of a cluster 56 constructed by the container engine 54 and the orchestration tool 53 will be described with reference to Fig. 11. It is noted that the cluster 56 may be constructed across a plurality of devices so that the functions are realized using not only the resources of the hardware 50 included in one camera 3 but also resources of other hardware included in other apparatuses.

The orchestration tool 53 manages the execution environment of the container 55 for each worker node 57. The orchestration tool 53 also constructs a master node 58 that manages all of the worker nodes 57.

A plurality of pods 59 are deployed on the worker node 57. The pod 59 is configured to include one or a plurality of containers 55, and realizes a predetermined function. The pod 59 is a management section for managing the container 55 by the orchestration tool 53.

The operation of the pod 59 in the worker node 57 is controlled by a pod management library 60.

The pod management library 60 is configured to include a container runtime for causing the pod 59 to use the logically allocated resources of the hardware 50, an agent that accepts control from the master node 58, a network proxy that performs communication between the pods 59 and communication with the master node 58, and the like.

In other words, the pods 59 are capable of realizing the predetermined functions that use the resources by the pod management library 60.

The master node 58 is configured to include an application server 61 that deploys the pods 59, a manager 62 that manages a deployment status of the container 55 by the application server 61, a scheduler 63 that determines the worker node 57 on which the container 55 is to be arranged, and a data sharing section 64 that shares data.

By using the configurations shown in Figs. 10 and 11, it becomes possible to deploy the AI application and AI model described above on the image sensor GS of the camera 3 using the container technology.

It is noted that as described above, it is also possible for the AI model to be stored in the memory section 45 in the image sensor GS via the communication I/F 46 shown in Fig. 7 so that the AI image processing is executed in the image sensor GS, or the configurations shown in Figs. 10 and 11 may be deployed on the memory section 45 and the in-sensor control section 43 in the image sensor GS so that the AI application and AI model described above are executed in the image sensor GS using the container technology.

Further, as will be described later, the container technology can also be used when deploying the AI application and/or AI model on the fog server 4 and/or the cloud-side information processing apparatus.

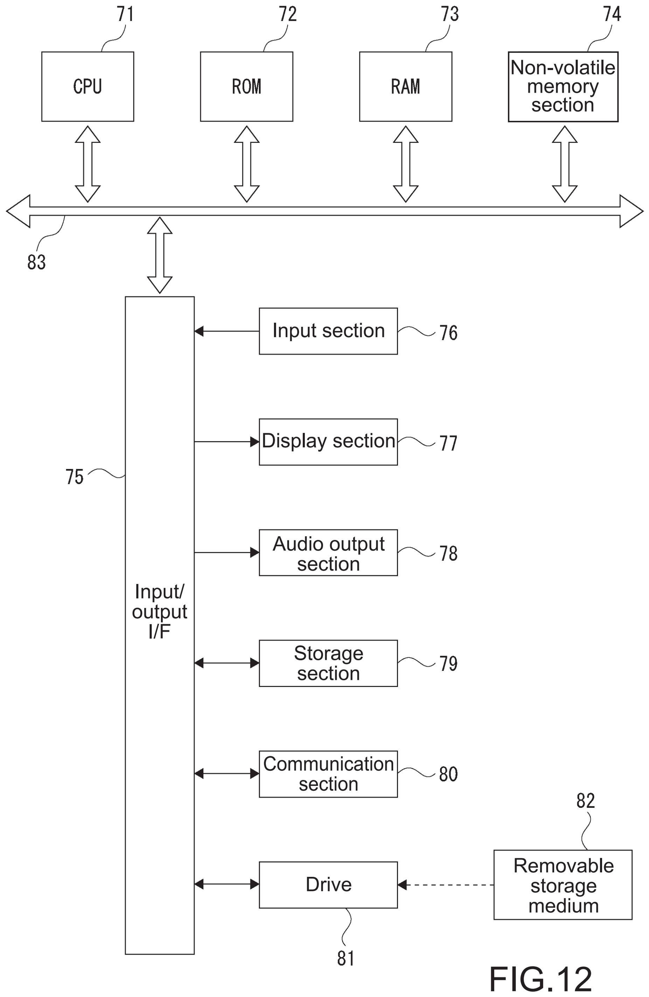

In that case, information of the AI application and/or AI model is deployed and executed on a memory such as a non-volatile memory section 74, a storage section 79, or a RAM 73 shown in Fig. 12, which is to be described later, as the container or the like.

### <1-5. Hardware configuration of information processing apparatus>

The hardware configuration of the information processing apparatus such as the cloud server 1, the user terminal 2, the fog server 4, and the management server 5 included in the information processing system 100 will be described with reference to Fig. 12.

The information processing apparatus includes a CPU 71. The CPU 71 functions as an arithmetic processing section that performs the various types of processing described above, and executes the various types of processing according to a program stored in a ROM 72 or the non-volatile memory section 74 such as an EEP-ROM (Electrically Erasable Programmable Read-Only Memory) or a program loaded from the storage section 79 to the RAM 73. The RAM 73 also stores, as appropriate, data requisite for the CPU 71 to execute the various types of processing, and the like.

It is noted that the CPU 71 provided in the information processing apparatus serving as the cloud server 1 functions as a license authorization section, an account service provision section, a device monitoring section, a marketplace function provision section, and a camera service provision section in order to realize the functions described above.

The CPU 71, the ROM 72, the RAM 73, and the non-volatile memory section 74 are connected to one another via a bus 83. An input/output interface (I/F) 75 is also connected to this bus 83.

An input section 76 constituted of operators and/or operation devices is connected to the input/output interface 75.

As the input section 76, for example, various operators and operation devices such as a keyboard, a mouse, a key, a dial, a touch panel, a touch pad, and a remote controller are assumed.

The input section 76 detects user operations, and the CPU 71 interprets signals corresponding to the input operations.

In addition, a display section 77 constituted of an LCD, an organic EL panel, or the like and an audio output section 78 constituted of a speaker and/or the like are connected to the input/output interface 75 either integrally or separately.

The display section 77 is a display section that performs various displays, and is constituted of, for example, a display device provided in a housing of a computer apparatus, a separate display device connected to the computer apparatus, or the like.

The display section 77 executes display of images for various types of image processing, moving images to be processed, and the like on a display screen based on instructions from the CPU 71. Furthermore, the display section 77 performs display of various operation menus, icons, messages, and the like, that is, as GUIs (Graphical User Interfaces), based on the instructions from the CPU 71.

The storage section 79 constituted of a hard disk, a solid-state memory, or the like and/or a communication section 80 constituted of a modem or the like may be connected to the input/output interface 75.

The communication section 80 performs communication processing via a transmission path such as the Internet, wired/wireless communication with various devices, and communication using bus communication and/or the like.

A drive 81 is also connected to the input/output interface 75 as necessary, and a removable storage medium 82 such as a magnetic disk, an optical disk, a magneto-optical disk, or a semiconductor memory is loaded as appropriate.

The drive 81 is capable of reading data files such as programs used in the respective processing, and/or the like from the removable storage medium 82. The read data files are stored in the storage section 79, or images and audio included in the data files are output by the display section 77 and the audio output section 78. In addition, the computer program and the like read from the removable storage medium 82 are installed in the storage section 79 as necessary.

In this computer apparatus, for example, software for the processing of the present embodiment can be installed via network communication by the communication section 80 or via the removable storage medium 82. Alternatively, the software may be stored in advance in the ROM 72, the storage section 79, or the like.

Further, image data obtained in the camera 3 and/or a processing result obtained by the AI image processing may be received and stored in the storage section 79 or in the removable storage medium 82 via the drive 81.

The CPU 71 performs processing operations based on various programs, to thus execute information processing and communication processing requisite as the cloud server 1, which is the information processing apparatus including the arithmetic processing section described above.

It is noted that the cloud server 1 is not limited to being configured by a single computer apparatus as shown in Fig. 12, and may be configured by systemizing a plurality of computer apparatuses. The plurality of computer apparatuses may be systemized using a LAN (Local Area Network) or the like, or may be arranged at remote locations by a VPN (Virtual Private Network) that uses the Internet or the like. The plurality of computer apparatuses may include computer apparatuses as a server group (cloud) that can be used through a cloud computing service.

### <2. First embodiment>

In the embodiment below, a display control function that the CPU 71 of the cloud server 1 as the cloud-side information processing apparatus executes as one of the marketplace functions F4 will be described. More specifically, a function executed by the marketplace function F4 as the display control section, that is, a function of displaying various screens for assisting the user in introducing a system, will be described.

It is noted that the apparatus including the display control section may be the management server 5 in addition to the cloud server 1 as the cloud-side information processing apparatus, or may be the fog server 4 or the user terminal 2 as the edge-side information processing apparatus.

One of the screens presented to the user by the marketplace function F4 functioning as the display control section is a requirement input screen 200.

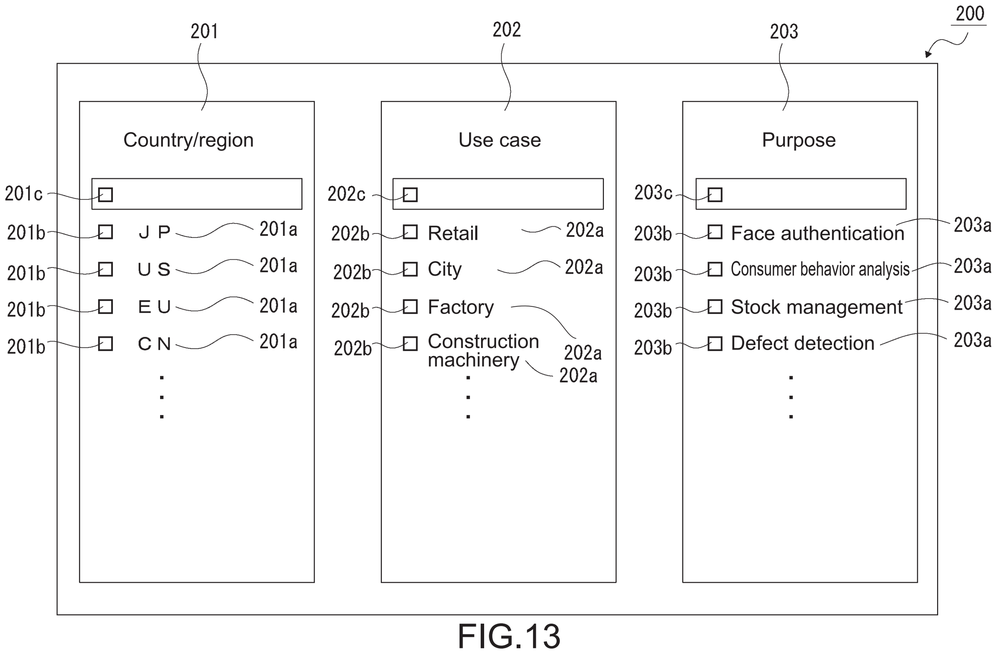

Fig. 13 shows an example of the requirement input screen 200. The requirement input screen 200 is a screen used for the user him/herself to input a user requirement regarding an applications and/or system to be introduced into the user environment.

The requirement input screen 200 is provided with a region input field 201, a use case input field 202, and a purpose input field 203.

For example, in the region input field 201, options 201a for selecting a country or region in which an application or system is to be introduced and check boxes 201b for selecting the options 201a are arranged.

Also, a collective selection operator 201c for collectively selecting all of the check boxes is arranged at an upper portion.

In the use case input field 202, options 202a for selecting a field to which the application or system is to be applied and check boxes 202b for selecting the options 202a are arranged.

In addition, a collective selection operator 202c for collectively selecting all of the check boxes is arranged at the upper portion.

In the purpose input field 203, options 203a for selecting a purpose for introducing the application or system and check boxes 203b for selecting the options 203a are arranged.

In addition, a collective selection operator 203c for collectively selecting all of the check boxes is arranged at the upper portion.

The display modes of the region input field 201, the use case input field 202, and the purpose input field 203 may be linked to one another.

For example, if Japan (JP) is selected in the region input field 201, the options 202a and 203a and check boxes 202b and 203b related to fields and purposes for which an AI model developed for Japan does not exist may be hidden (or disabled for selection) out of the options 202a and 203a and check boxes 202b and 203b arranged in the use case input field 202 and the purpose input field 203.

Similarly, if the option 202a selected in the use case input field 202 is, for example, retail, the option of defect detection in the purpose input field 203, which is the purpose in the field of factory, may be hidden or disabled for selection.

Further, although Fig. 13 shows the example in which the region input field 201, the use case input field 202, and the purpose input field 203 are all provided in one requirement input screen 200, other modes are also possible.

For example, as the requirement input screen 200, a screen provided with only the region input field 201 is presented to the user first, and then a screen provided with only the use case input field 202 is presented to the user according to the selection result. In the screen displayed herein, the options 202a to be arranged may differ in accordance with the result of the selection operation made with respect to the region input field 201.

In addition, a screen provided with only the purpose input field 203 is presented to the user in accordance with the selection result with respect to the use case input field 202. In the screen displayed herein, the options 203a to be arranged may differ in accordance with the result of the selection operation made with respect to the use case input field 202.

Further, other than the mode of selecting the option 201a, the setting of an application region and/or the like of an application or system in accordance with an input operation made with respect to the region input field 201 may be performed based on GNSS (Global Navigation Satellite Systems) or an IP (Internet Protocol) address.

When the input to the requirement input screen 200 is completed, a configuration pattern presentment screen 300, which is one of the screens to be presented to the user, is presented by the marketplace function F4 functioning as the display control section.

A configuration pattern is a pattern of a configuration of each apparatus to be introduced into an environment on the user side, and is a pattern of the system configuration. The user can select one of the plurality of configuration patterns presented in the configuration pattern presentment screen 300.

It is desirable to select the system configuration while taking into consideration how the plurality of SW components constituting an application are to be deployed in the respective apparatuses included in the system.

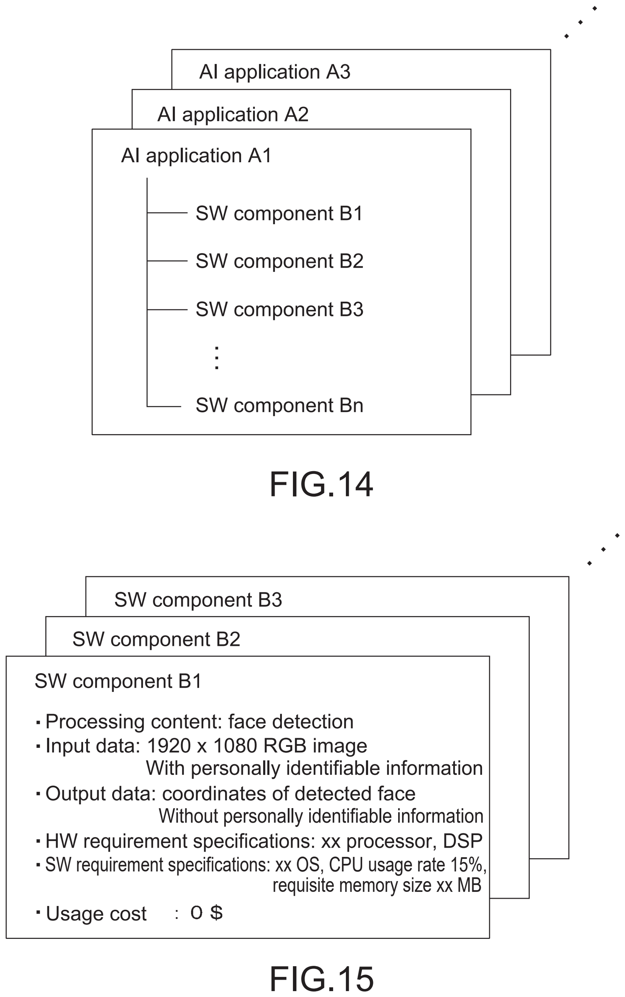

Specifically, an example of the applications and SW components is shown in Fig. 14. It is noted that an AI application that performs the AI image processing using an AI model is taken as an example of the application. As described above, the AI application is an application that performs the AI image processing using image data output from the sensor section (image pickup section 41) of the image sensor GS included in the camera 3.

As shown in the figure, in the cloud-side information processing apparatus, a plurality of AI applications A1, A2, ..., An are prepared in accordance with purposes and/or the like.

In each of the AI applications, the plurality of SW components (containers and microservices) are defined for realizing a specific function. It is noted that the SW components included in an AI application may be the same as the SW components included in another AI application.

In the AI application A1, SW components B1, B2, B3, ..., Bn are defined. In other words, a desired function as the AI application A1 can be realized by executing the SW components B1, B2, B3, ..., Bn in a predetermined order.

As shown in Fig. 15, the SW component B1 is accompanied by information (additional information) including requirement specifications and/or the like for determining an apparatus on which the SW component B1 is to be deployed, along with a program for realizing desired processing.

Set as the additional information of the SW component B1 are "processing content", "input data", "output data", "HW (Hardware) requirement specifications", "SW requirement specifications", "usage cost", and the like. It is noted that other additional information such as "inference precision" may also be included, for example.

The "processing content" indicates a content of processing executed by the SW component, and the processing content of the SW component B1 is "face detection".

The "input data" indicates specifications and/or the like of data input to the SW component, and the input data of the SW component B1 is a 1920 x 1080 RGB image. It is noted that it is possible to use an even larger image, and in that case, an SW component that performs resolution conversion may be used, or the SW component B1 may be enabled to perform resolution conversion processing.

It is noted that considering a case of using the resolution conversion processing in another AI application, it is favorable to separately provide an SW component that performs the resolution conversion.

It can also be seen that the input data of the SW component B1 includes information that can identify an individual (personally identifiable information). Information on a presence or absence of personally identifiable information is used when a user requires to preferentially realize privacy protection.

It is noted that the "input data" can be regarded as SW requirement specifications.

The "output data" indicates specifications and/or the like of data output from the SW component, and the output data of the SW component B1 is coordinate information of a detected face. It can also be seen that the output data does not include personally identifiable information.

In other words, no privacy issue will arise for the subsequent SW component that receives and processes the output data of the SW component B1 even when deployed on either the edge-side information processing apparatus or the cloud-side information processing apparatus.

The "HW (Hardware) requirement specifications" are HW specifications required for an apparatus on which the SW component is to be deployed, and the HW requirement specifications of the SW component B1 require an xx processor and a DSP.

The "SW (Software) requirement specifications" are SW specifications required for an apparatus on which the SW component is to be deployed, and the SW requirement specifications of the SW component B1 require xx OS to be installed, a CPU usage rate to be 15%, and a requisite memory size to be xx MB. In other words, it can be seen that, when the CPU usage rate is 85% or more in a state before deployment of the SW component B1, it may not be possible to appropriately execute the processing of the SW component B1.

The "usage cost" is a cost required for using the SW component, and indicates that no cost is required after the SW component is deployed on an apparatus.

It is noted that separate from the usage cost, an introduction cost may be included as the additional information. The introduction cost is, for example, a cost to be paid when purchasing the SW component B1 using the marketplace function described above.

As the SW components, other than the exemplified SW component that performs "face detection", there are also SW components that perform "head detection", "pose detection", "attribute detection", "result aggregation", "person detection", "stockout detection", "defect detection", and "behavior estimation", and the like.

An example of determining an apparatus on which the SW component is to be deployed based on these pieces of additional information will be described.

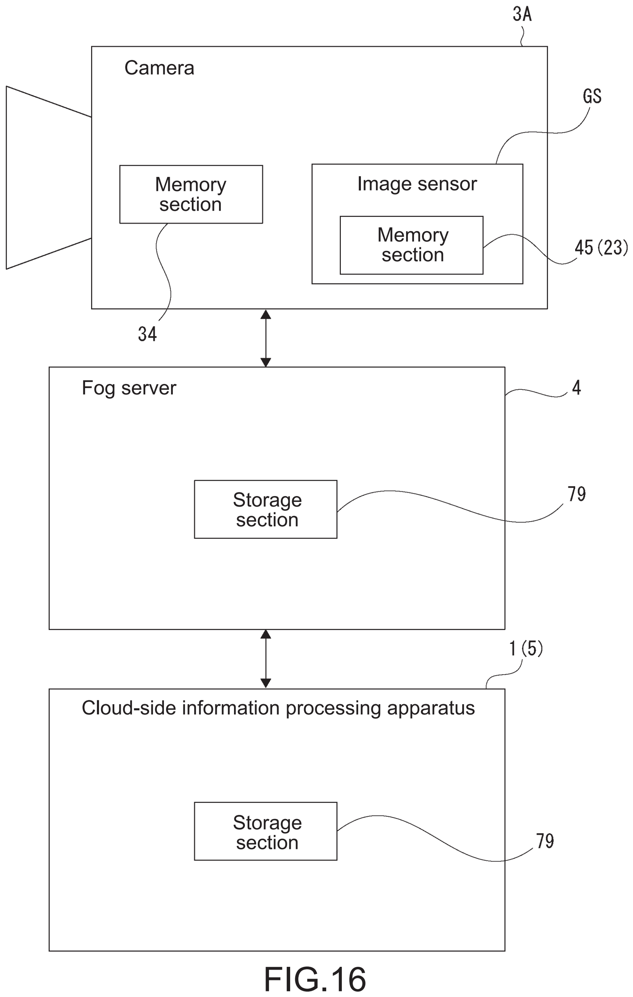

Fig. 16 shows the apparatuses on which the SW components are to be deployed, in other words, an excerpt of the storage sections that store the programs as the SW components.

Specifically, the information processing system 100 includes, as the storage sections of the edge-side information processing apparatuses, the memory section 34 provided in the camera 3A, which is one of the cameras 3, the memory section 45 of the image sensor GS provided inside the camera 3A, and the storage section 79 of the fog server 4, and also the storage section 79 provided in each of the cloud server 1 and the management server 5 as the cloud-side information processing apparatuses.

It is noted that the memory section 45 of the image sensor GS may be replaced with the memory section 23 of the AI image processing chip 8 constituting the AI sensor Sai.

It is noted that although one camera 3A is exemplified in the present figure, the numbers of memory section 34 and memory section 45 to become deployment destination candidates correspond to the number of cameras 3 required for the use.

In addition, a plurality of fog servers 4 may be provided as necessary.

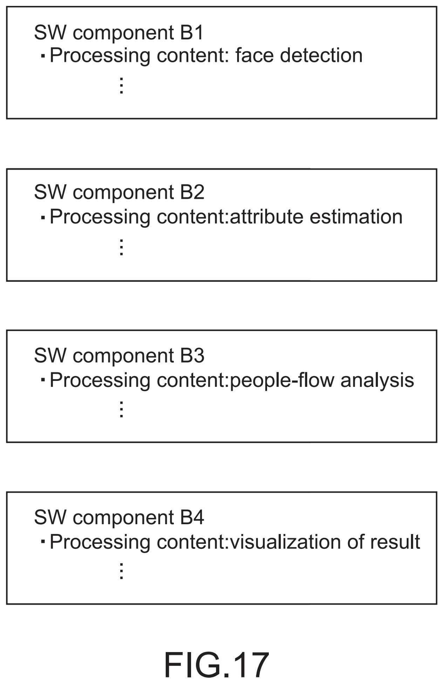

Fig. 17 shows an example of the contents of the SW components B1, B2, B3, and B4 for realizing the functions of the AI application A1 deployed on an apparatus.

The SW component B1 is a program for performing face detection, the SW component B2 is a program for performing attribute estimation, the SW component B3 is a program for analyzing a flow of people, and the SW component B4 is a program for presenting estimation results up to that point to the user.

Since the SW components have different HW requirement specifications, SW requirement specifications, and/or the like, it is desirable to determine the system configuration while taking into consideration the deployment destination apparatuses of the SW components.

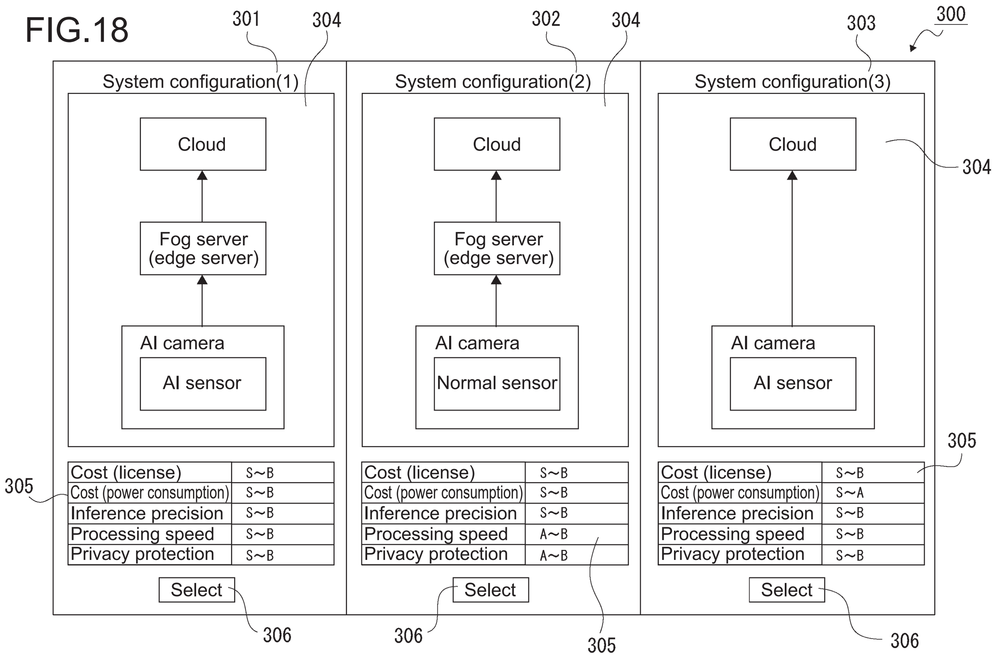

An example of the configuration pattern presentment screen 300 to be presented to the user is shown in Fig. 18.

As an example, the configuration pattern presentment screen 300 is provided with three system configuration fields 301, 302, and 303.

The system configuration field 301 is a field that displays information on a system configuration (1).

The system configuration field 302 is a field that displays information on a system configuration (2).

The system configuration field 303 is a field that displays information on a system configuration (3).

Each of the system configuration fields 301, 302, and 303 is provided with a general outline field 304 showing a general outline of the system configuration, a characteristics information field 305 showing characteristics of the system configuration, and a selection button 306.

The general outline field 304 shows a configuration example that uses the cloud-side information processing apparatus, the fog server 4, the camera 3 (the AI camera in the figure), and the image sensor GS.

As shown in the general outline field 304 of the system configuration (1) and the general outline field 304 of the system configuration (3), both the configuration including the fog server 4 and the configuration not including the fog server 4 are presented to the user.

Furthermore, as shown in the general outline field 304 of the system configuration (1) and the general outline field 304 of the system configuration (2), both the configuration that uses, as the image sensor GS, the AI sensor Sai capable of performing the AI image processing and the configuration that uses a normal sensor that is incapable of performing the AI image processing and outputs image data are presented to the user.

Various configuration examples other than that shown in Fig. 18 are conceivable. For example, not only the information on the distinction between the AI sensor Sai and the normal sensor, but also information on a sensor type may be included.

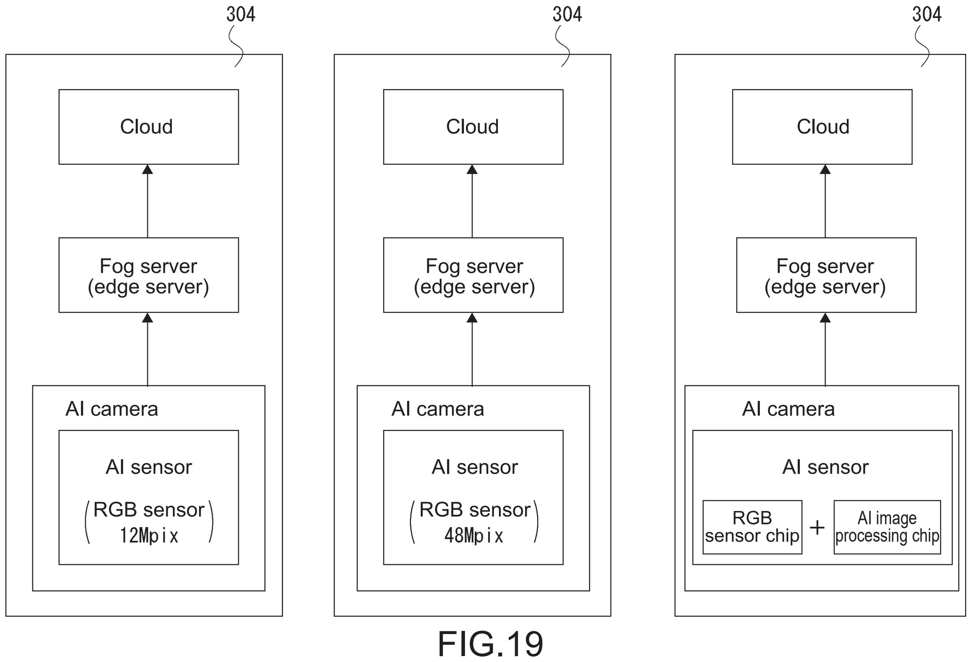

For example, as shown in Fig. 19, display may be made in the general outline field 304 such that it can be seen that the AI sensor Sai is a 12-Mpix RGB sensor, or display may be made in the general outline field 304 such that it can be seen that the AI sensor Sai is a 48-Mpix RGB sensor. Alternatively, display may be made in the general outline field 304 such that it can be seen that the AI sensor Sai is constituted of the RGB sensor chip 7 and the AI image processing chip 8.

In the characteristics information field 305 of the system configuration fields 301, 302, and 303, items and evaluation values are displayed.

Items displayed in the characteristics information field 305 include, for example, "cost (license)", "cost (power consumption)", "inference precision", "processing speed", "privacy protection", and the like.

The cost (license) is, for example, a cost requird to continuously use an AI model or AI application. The more the AI models or AI applications are used or the higher the drift countermeasure frequency (relearning frequency) of the AI model is, the higher the cost becomes.

It is noted that the evaluation values are "S", "A", and "B" in a descending order of advantageousness for the user regardless of the items. It is noted that this is a mere example, and each item may be evaluated by four or more levels or by two levels.

It is noted that the cost (license) may include not only the cost that depends on the AI model or AI application, but also a management cost in a case where each of the cameras 3 and the image sensor GS are managed by the management server 5.

The cost (power consumption) increases as the number of AI models and processing load used on the edge side increase or as the number of apparatuses to be introduced on the edge side increases and performance thus becomes higher.

The inference precision increases as an executable size of the AI model increases. The higher the inference precision, the closer the evaluation value becomes to "S".

The more the processing is performed in a terminal apparatus on the edge side, the faster the processing speed becomes since the amount of information becomes smaller and the processing load on the subsequent apparatus becomes smaller. The faster the processing speed becomes, the closer the evaluation value becomes to "S".

Regarding privacy protection, the more the processing is performed in the terminal apparatus on the edge side, the more protected the privacy becomes since information related to privacy is cut from data to be output to the subsequent apparatus. In other words, by performing the AI image processing in the image sensor GS, which is the terminal apparatus on the edge side, and outputting only the image data and/or accompanying data (metadata and/or the like) in a state where the information related to privacy is cut, privacy protection is strengthened.

The stronger the privacy protection becomes, the closer the evaluation value becomes to "S".

The evaluation values displayed as "S", "A", and "B" in the characteristics information field 305 are displayed while having a certain range. This is because the evaluation changes depending on which apparatuses the respective SW components constituting the AI application are to be deployed on.

In other words, the characteristics information field 305 can be said to be an area that displays a certain degree of indication for each item.

The user can select a system configuration to be introduced into the user environment while referring to the items and evaluation values presented in the characteristics information field 305.

The selection button 306 is an operator that is operated to select one of the system configuration patterns presented in the configuration pattern presentment screen 300.

It is noted that when there are many system configuration patterns to be presented in the configuration pattern presentment screen 300, an operator for page forwarding and/or the like may be provided in the configuration pattern presentment screen 300.

When the user selects one of the system configuration patterns presented in the configuration pattern presentment screen 300, the marketplace function F4 as the display control section presents a deployment pattern presentment screen 400 to the user.

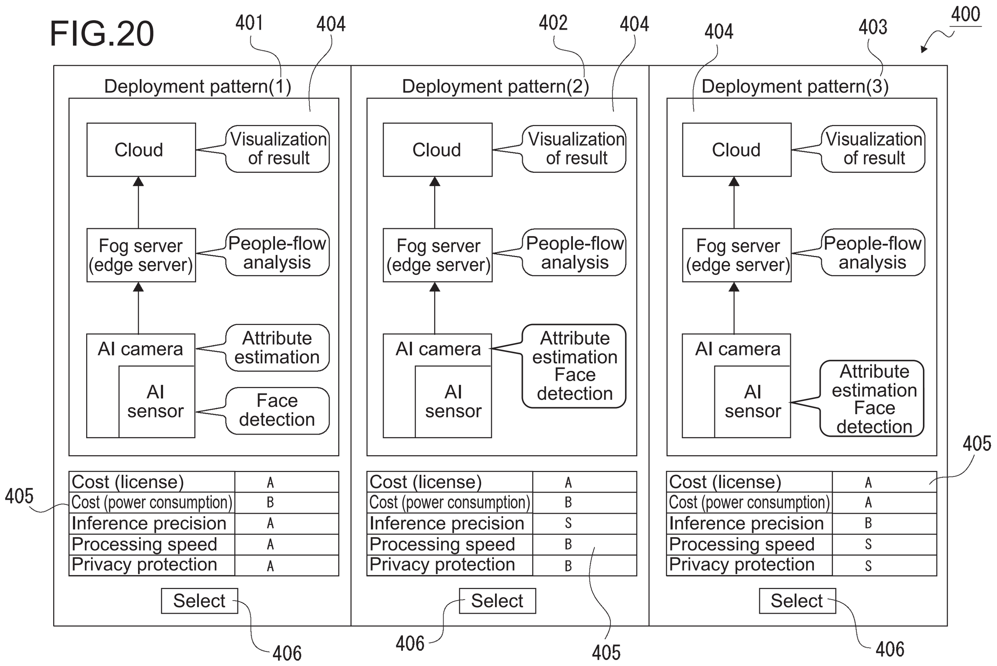

An example of the deployment pattern presentment screen 400 is shown in Fig. 20. It is noted that the example shown in the figure is an example of a case where the system configuration (1) in Fig. 18 is selected.

The deployment pattern presentment screen 400 is provided with a plurality of deployment pattern display fields 401, 402, and 403. Specifically, the deployment pattern display field 401 is a field for displaying information on a deployment pattern (1), the deployment pattern display field 402 is a field for displaying information on a deployment pattern (2), and the deployment pattern display field 403 is a field for displaying information on a deployment pattern (3).

Each of the deployment pattern display fields 401, 402, and 403 is provided with a general outline field 404, a detailed characteristics information field 405, and a selection button 406.

The general outline field 404 displays a correspondence relationship between the respective apparatuses included in the system configuration selected in the configuration pattern presentment screen 300 and the SW components to be deployed.

For example, the general outline field 404 of the deployment pattern display field 401 displays an example in which an SW component that performs face detection is deployed on the AI sensor Sai, and an SW component that performs attribute estimation is deployed on the AI camera. In addition, the general outline field 404 displays an example in which an SW component that performs a people-flow analysis is deployed on the fog server 4, and an SW component that visualizes the analysis result is deployed on the cloud-side information processing apparatus.

This deployment pattern equalizes the processing loads of the apparatuses.

The SW component that performs face detection outputs, for example, a ROI (Region of Interest) image for the detected face.

The SW component that performs attribute estimation outputs, for example, information on an estimated attribute (gender, age, race, occupation, and the like).

The SW component that performs a people-flow analysis outputs, for example, flow line information of customers as the analysis result.

In other words, the deployment pattern displayed in the deployment pattern display field 401 is an example in which a facial image is not output to the outside of the AI camera, thereby providing a certain degree of privacy protection.

The general outline field 404 of the deployment pattern display field 402 displays an example in which both an SW component that performs attribute estimation and an SW component that performs face detection are deployed on the AI camera. This deployment pattern reduces the processing load on the AI sensor Sai.

Also, similar to the deployment pattern displayed in the deployment pattern display field 401, since the facial image is not output to the outside of the AI camera, a certain degree of privacy protection is provided.

The general outline field 404 of the deployment pattern display field 403 displays an example in which both an SW component that performs attribute estimation and an SW component that performs face detection are deployed on the AI sensor Sai. This deployment pattern performs as much processing as possible within the AI sensor Sai, so that the face image is not output to the outside of the AI sensor Sai, and privacy protection is strengthened.

The detailed characteristics information field 405 displays items and evaluation values as characteristics information corresponding to the deployment pattern of each of the SW components. It is noted that since the system configuration is already determined at a time point when the deployment pattern presentment screen 400 is presented, the detailed characteristics information field 405 displays one evaluation value for each item instead of the evaluation values having a range as in the characteristics information field 305 in the configuration pattern presentment screen 300.

The selection button 406 is an operator that is operated to select one of the deployment patterns presented in the deployment pattern presentment screen 400.

It is noted that the evaluation values as the characteristics information displayed in the configuration pattern presentment screen 300 and the deployment pattern presentment screen 400 may be obtained based on a table in which the configuration patterns and/or deployment patterns are associated with the evaluation values, or may be obtained by performing a simulation.

In the simulation for calculating the evaluation values as the characteristics information, for example, information on a country or region, information on a use case, information on a purpose, information on a system configuration, and the like are used.

In addition, the information on a system configuration includes information on whether or not to use the fog server 4, information on the number of fog servers 4 to be used, information on the number of cameras 3, information on the number of image sensors GS, information on whether or not the image sensor GS is the AI sensor Sai, information on a sensor type, and the like.

Furthermore, by incorporating performance information (including not only information on a processing capacity but also information on the number of pixels, and the like) and/or the like of the fog server 4, the camera 3, and the image sensor GS to be introduced or used in the information on a system configuration, the precision of the simulation can be improved.

The marketplace function F4 performs processing for purchasing the fog server 4, the camera 3, and/or the image sensor GS (or the AI sensor Sai) based on the deployment pattern selected in the deployment pattern presentment screen 400.

The account service function F2 in the cloud-side information processing apparatus performs processing of registering the purchased fog server 4, camera 3, and/or image sensor GS.

Furthermore, the marketplace function F4 performs deployment processing that is based on the deployment pattern selected by the user with respect to each device for which registration and installment after purchase have been completed.

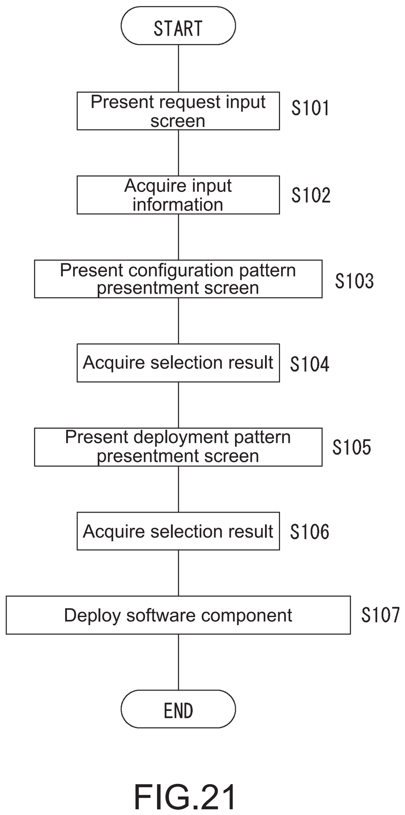

An example of processing executed by the CPU 71 of the cloud-side information processing apparatus is shown in Fig. 21.

In Step S101, the CPU 71 of the cloud-side information processing apparatus performs presentment processing for presenting the requirement input screen 200 to the user terminal 2.

In Step S102, the CPU 71 of the cloud-side information processing apparatus acquires information input in the requirement input screen 200 (user requirement information).

In Step S103, the CPU 71 of the cloud-side information processing apparatus performs processing of presenting, to the user terminal 2, the configuration pattern presentment screen 300 that presents candidates of system configurations that have been extracted based on the acquired user requirement information.

In Step S104, the CPU 71 of the cloud-side information processing apparatus acquires a configuration pattern of the system configuration selected in the configuration pattern presentment screen 300 as a selection result.

In Step S105, the CPU 71 of the cloud-side information processing apparatus performs processing of presenting, to the user terminal 2, the deployment pattern presentment screen 400 that presents candidates of deployment patterns of SW components that have been extracted based on the selected system configuration pattern.

It is noted that when a simulation is necessary for the evaluation values to be displayed in the characteristics information field when presenting the deployment pattern candidates, the simulation is performed between Step S104 and Step S105.

In Step S106, the CPU 71 of the cloud-side information processing apparatus acquires the deployment pattern selected in the deployment pattern presentment screen 400 as a selection result.

In Step S107, the CPU 71 of the cloud-side information processing apparatus performs processing of deploying the SW components on the respective apparatuses based on the selected deployment pattern.

It is noted that when the apparatus is not installed in the user environment or the registration of the apparatus is not completed, a purchase screen or registration screen of the apparatus is presented to the user terminal 2 before executing the processing of Step S107.

Then, the CPU 71 of the cloud-side information processing apparatus only needs to execute the processing of Step S107 as appropriate at the stage where the purchase and registration of the apparatus are completed.

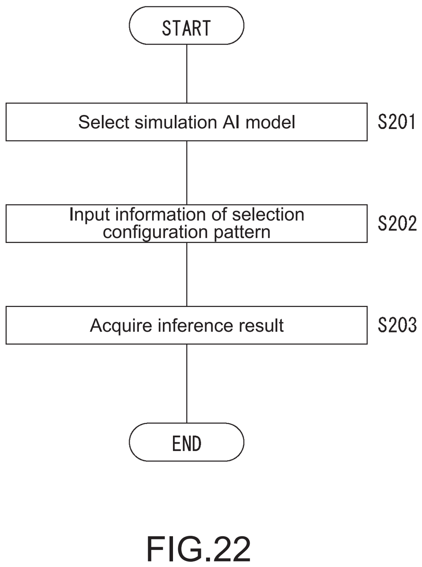

Next, an example of processing executed by the CPU 71 of the cloud-side information processing apparatus when executing the simulation on the evaluation values is shown in Fig. 22.

In Step S201, the CPU 71 of the cloud-side information processing apparatus selects a simulation AI model.

In Step S202, the CPU 71 of the cloud-side information processing apparatus inputs information on a selection configuration pattern, which is the configuration pattern selected by the user, to the AI model. The information input at this time is information on whether or not to use the fog server 4, the number of cameras 3, the number of image sensors GS, and further, the specifications and performance information of each apparatus, and/or the like.

By inputting such information to the AI model, examples of the deployment patterns of the SW components and evaluation values for the characteristics information are output as an inference result from the AI model.

In Step S203, the CPU 71 of the cloud-side information processing apparatus acquires such an inference result.

It is noted that when a plurality of configuration patterns are presented to the user, the processing of Step S201 to Step S203 needs to be performed for each of the presented configuration patterns.

To achieve this, for example, it is possible to input not only the information on the selection configuration pattern described above but also information representing characteristics of the deployment pattern to the simulation AI model.

For example, information for instructing extraction of a deployment pattern in which the evaluation value of the privacy protection becomes high, extraction of a deployment pattern in which the evaluation value of the processing speed becomes high, extraction of a deployment pattern in which the evaluation values are balanced, and/or the like is input to the AI model.

Accordingly, the deployment pattern and characteristics information thereof output from the simulation AI model become those that are based on the instruction. Then, by presenting the deployment patterns with high evaluation values for the items of the characteristics information in the deployment pattern presentment screen 400, the user can select a deployment pattern suited for each item.

Also in the deployment pattern presentment screen 400, by presenting only a predetermined number (five or the like) of deployment patterns in which the evaluation values of the respective items become high to the user, it is possible to present, to the user, appropriate deployment patterns that meet the requirement of the user while suppressing the number of deployment patterns that become selection targets of the user.

It is noted that big data is used in learning of the simulation AI model, for example. In the big data, a type of application, information on the camera 3, a captured image to be analyzed, information on an OS and/or processing time used in processing, information indicating an extent to which the performance of each apparatus has been consumed, such as a usage rate of an arithmetic function of each apparatus and a usage rate of a memory capacity, and information on the processing time and the like are stored in association with one another. Furthermore, in the case of a use in monitoring a store including the plurality of cameras 3, information on a size of the store and/or the like is also included in the big data. In other words, information on a monitoring target, information on a detection target, and/or the like may also be included.

In addition, other cost information such as a price of each apparatus may also be included.

It is noted that although the system configuration including one fog server 4 and one camera 3 has been exemplified herein, it is also possible to provide a plurality of fog servers 4 and/or a plurality of cameras 3 in a case where the store is large, in a case where a plurality of stores are managed centrally, and the like.

In this case, the configuration pattern presentment screen 300 and the deployment pattern presentment screen 400 may present system configurations and deployment patterns that include the plurality of fog servers 4 and/or the plurality of cameras 3.

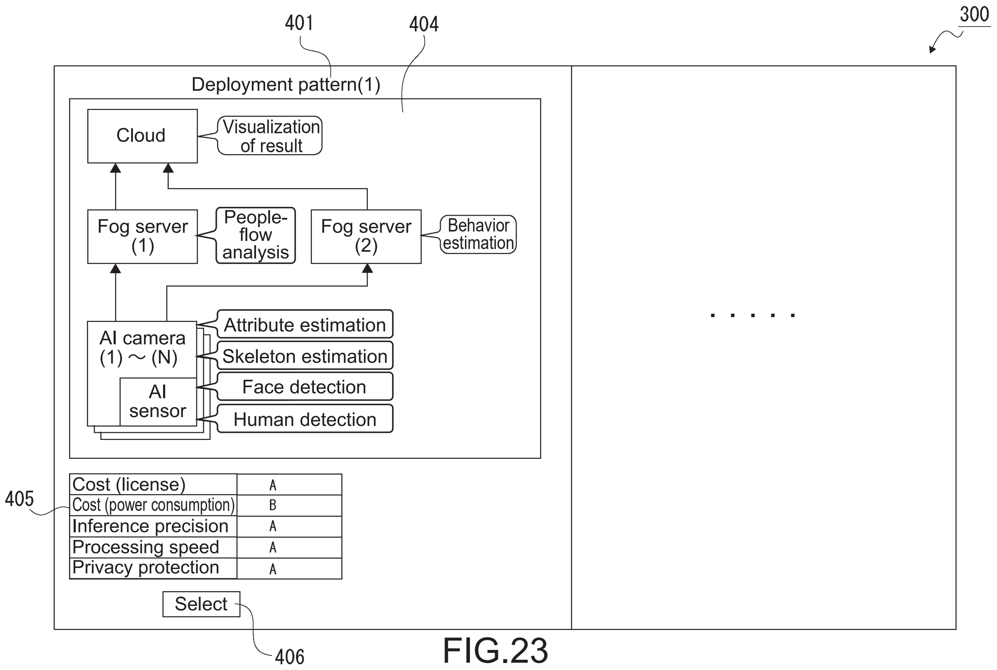

Fig. 23 shows an example in which a system configuration including two fog servers 4 and N cameras 3 and a deployment example of the SW components are presented in the deployment pattern display field 401 of the deployment pattern presentment screen 400.

It is noted that the number of cameras 3 may be determined in accordance with an angle of view of the image sensor GS included in the camera 3. For example, in the case of using a 12-Mpix image sensor GS and in the case of using a 48-Mpix image sensor GS, the number of cameras 3 may be set to be smaller in the case of using a 48-Mpix image sensor GS.

The marketplace function F4 may propose configuration patterns based on the performance of the image sensor GS in this manner. The marketplace function F4 may then calculate (simulate) the evaluation values for the characteristics information while taking into consideration the type of image sensor GS and the number of cameras 3, and present the evaluation values to the user.

It is also possible to realize a plurality of applications using the same system configuration. In that case, the configuration pattern presentment screen 300 and the deployment pattern presentment screen 400 may present deployment patterns in which a plurality of SW components (AI models) constituting the plurality of AI applications are deployed on the fog server 4 and the camera 3.

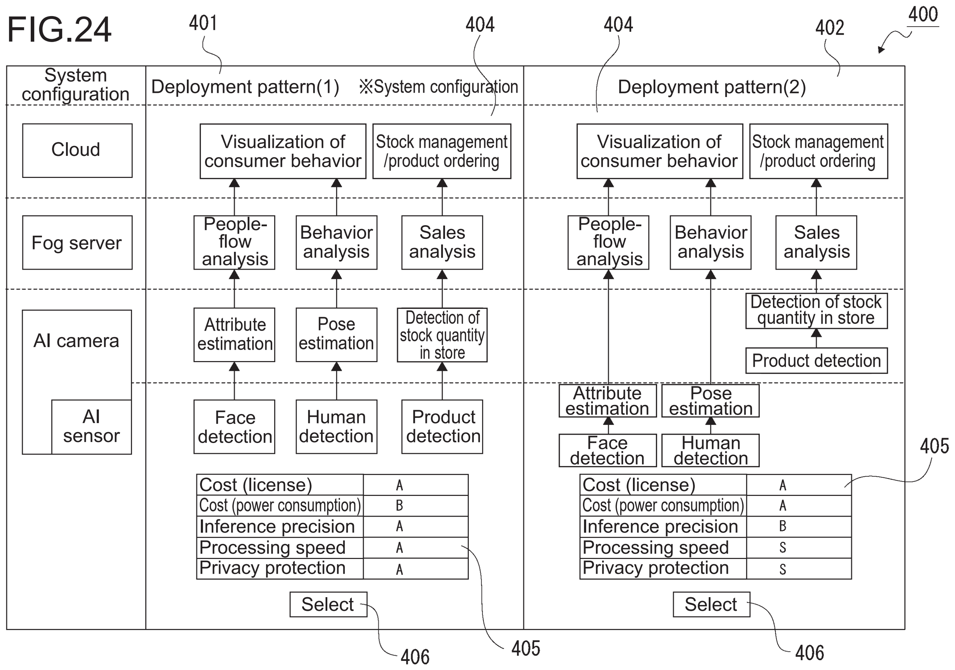

Fig. 24 shows an example of presenting, to the user, a deployment example in which a plurality of SW components are deployed on each of the cloud-side information processing apparatus (cloud in the figure), the fog server 4, the camera 3 as an AI camera capable of performing the AI image processing, and the AI sensor Sai.

The deployment pattern (1) presented in the deployment pattern display field 401 is a deployment pattern that takes into consideration balancing of processing loads of the apparatuses.

The deployment pattern (2) presented in the deployment pattern display field 402 is a deployment pattern in which inference processing related to people is performed within the AI sensor Sai as much as possible in order to protect privacy, and processing with respect to a product that is considered to be irrelevant to privacy protection is performed within the camera 3 outside the AI sensor Sai.

It is noted that a timing at which the deployment pattern presentment screen 400 is presented is set to be a timing at which the system configuration is determined. Therefore, by presenting the system configuration outside the deployment pattern display fields 401 and 402 and the like (the left side in Fig. 24) as shown in Fig. 24, only the deployment examples of the SW components may be arranged in the deployment pattern display fields 401 and 402 and the like.

Moreover, information on whether or not introduction is possible, that is presented for each region (country or region), may be displayed for each deployment pattern in the deployment pattern presentment screen 400. For example, in the example shown in Fig. 24, it is presented to the user that it is difficult to introduce the deployment pattern (1) in Europe (EU) and China (CN).

### <3. Second embodiment>

The first embodiment has described the example in which the AI image processing that is performed on an image output from the image sensor GS arranged inside a certain camera 3 is performed by the camera 3 provided with that image sensor GS.

In the present example, descriptions will be given on an example in which the AI image processing on an image output from the image sensor GS arranged inside a certain camera 3 is executed by the control section 33 of another camera 3.

The marketplace function F4 presents configuration patterns of system configurations in response to an input to the requirement input screen 200 by the user. When the user desires cost reduction of the camera 3, a configuration pattern including the camera 3 having low performance may be selected from the presented configuration patterns.

In such a case, the marketplace function F4 presents system configurations and/or deployment patterns for receiving image data from an AI sensor arranged in another camera 3 and performing predetermined AI image processing.

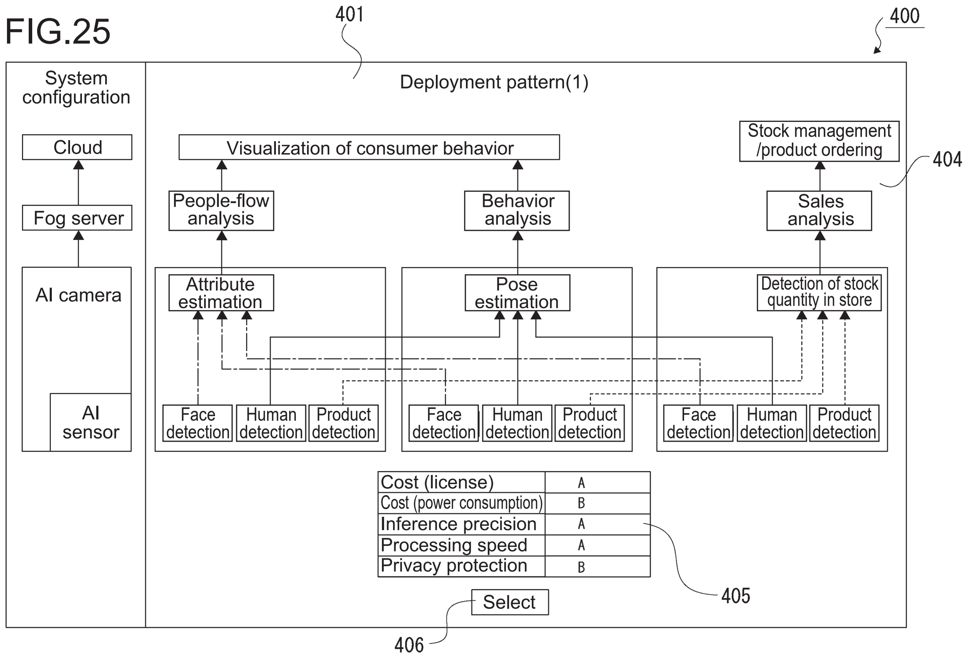

Specifically, an example of the deployment pattern presentment screen 400 is shown in Fig. 25. In the present example, the user is considering to introduce a plurality of AI applications.

Therefore, a deployment pattern in which, as SW components for realizing the plurality of applications, an SW component of "face detection", an SW component of "person detection", and an SW component of "product detection" are deployed on the AI sensor Sai is presented.

Further, of the image data output from the plurality of AI sensors Sai, image data obtained by the SW component of "face detection" is transmitted to one camera 3. Then, in the camera 3, an SW component of "attribute estimation" is deployed.

Furthermore, of the image data output from the plurality of AI sensors Sai, image data obtained by the SW component of "person detection" is transmitted to one camera 3. Then, in the camera 3, an SW component of "pose estimation" is deployed.

Moreover, of the image data output from the plurality of AI sensors Sai, image data obtained by the SW component of "product detection" is transmitted to one camera 3. Then, in the camera 3, an SW component of "detection of stock quantity in store" is deployed.

In other words, by the cameras 3 receiving the output of the plurality of AI sensors Sai from other cameras 3, only one SW component only needs to be deployed on the memory section 34 of the camera 3.

By presenting such a deployment pattern to the user, it becomes possible to adopt the camera 3 of a model in which a capacity of the memory section 34 of the camera 3 is small, and achieve cost reduction.

It is noted that when considering miniaturization of an AI model as the SW component to be deployed on the camera 3, it is desirable for the SW component to output a highly precise inference result exclusively under a predetermined condition.

Therefore, the camera 3 as the transmission destination of the inference result may be differentiated for every plurality of AI sensors Sai capable of obtaining image data having similar average luminance values, for example, out of the plurality of AI sensors Sai.

Specifically, the inference results output from the AI sensors Sai of the plurality of cameras 3 installed at a bright place are transmitted to a first camera 3. In addition, the inference results output from the AI sensors Sai of the plurality of cameras 3 installed at a dark place are transmitted to a second camera 3 different from the first camera 3.

As a result, in the first camera 3, it is possible to obtain a highly precise inference result by deploying an AI model that has been learned using image data captured at a bright place.

Furthermore, in the second camera 3, it is possible to obtain a highly precise inference result by deploying an AI model that has been learned using image data captured at a dark place.

### <4. Modified examples>

The system configuration presented by the marketplace function F4 may include the cameras 3 that differ in performance.

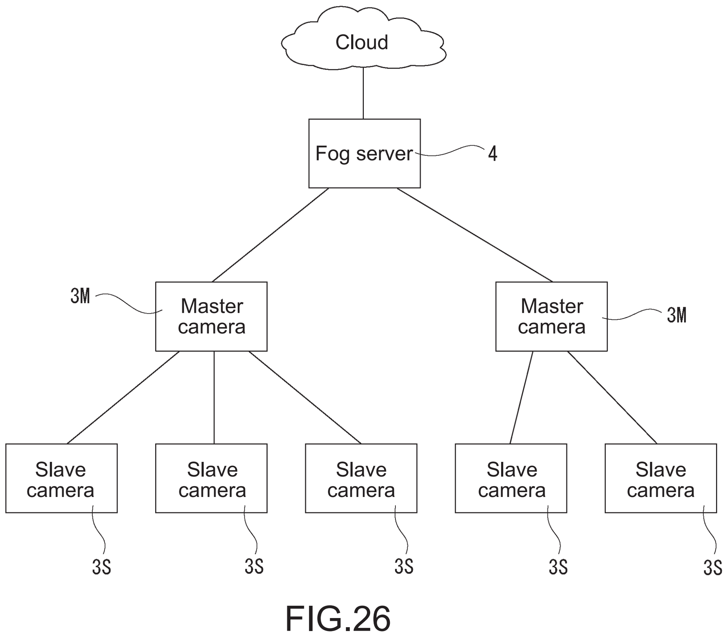

For example, Fig. 26 shows an example of a system configuration including master cameras 3M, which are the cameras 3 with relatively high computing power, and slave cameras 3S, which are the cameras 3 with relatively low computing power.

The master camera 3M includes, for example, a GPU and the memory section 34 of several GBytes. On the other hand, the slave camera 3S includes a microcomputer and the memory section 34 of several MBytes.

In the memory section 34 of the slave camera 3S, an AI model with a small capacity (for example, an SW component that performs person detection) or the like is deployed. In addition, an inference result obtained after the AI image processing performed in the slave camera 3S is provided to the master camera 3M. In other words, the slave camera 3S only needs to secure communication with the master camera 3M.

In the memory section 34 of the master camera 3M, an AI model with a large capacity and high performance (for example, an SW component that performs pose estimation) or the like is deployed. In the master camera 3M, more advanced inference processing is performed using the inference result received from the slave camera 3S. An inference result obtained after the the AI image processing performed in the master camera 3M is transmitted to the fog server 4.

It is noted that although both the master cameras 3M and the fog server 4 are provided in the system configuration example shown in Fig. 26, it is also possible to use a system configuration not provided with the fog server 4 by consolidating the functions as the fog server 4 in the master cameras 3M.

It is noted that the deployment patterns presented in the deployment pattern presentment screen 400 may be presented to the user again after the trial.

For example, after the system configuration to be introduced into the user environment is decided, the SW components are tentatively deployed on the respective apparatuses as a trial. After that, the inference results and/or processing results of the SW components, image pickup conditions of the cameras 3 and/or analysis results of captured image data (for example, luminance information), or the like are transmitted to the cloud server 1 and/or the like.

The inference result to be transmitted may include, for example, precision information (likelihood information) of the inference result, and the like. Furthermore, the processing result to be transmitted may include a processing time, information on hardware resources consumed in the apparatus, and/or information on a processing frequency and the like.

In the cloud-side information processing apparatus such as the cloud server 1, as the marketplace function F4, the deployment patterns are presented to the user again using the deployment pattern presentment screen 400. The deployment patterns presented at this time are extracted while taking into consideration the information on the inference results and/or processing results transmitted to the cloud server 1 in the trial environment.

Furthermore, when presenting the deployment patterns to the user again, a configuration that should be additionally introduced into the user environment (for example, an additional camera 3 or an additional fog server 4) and/or the like may be proposed. In that case, the marketplace function F4 may cause the configuration pattern presentment screen 300 to be displayed before the deployment pattern presentment screen 400 so as to present a configuration pattern including the additional configuration to the user.

### <5. Others>

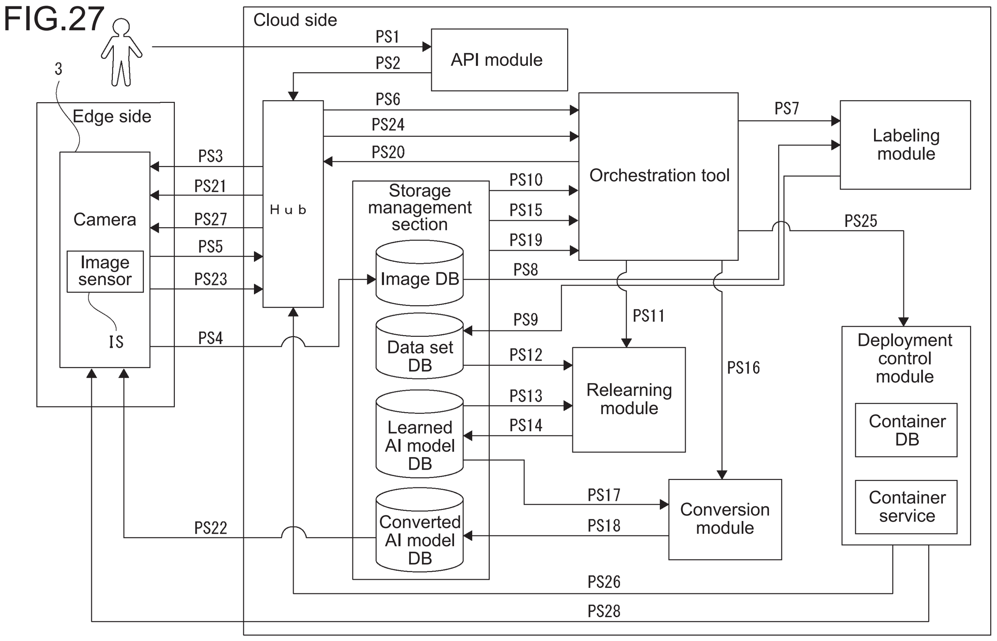

A flow of processing when performing, after the SW components of an AI application and the AI model are deployed, relearning of the AI model and update of the AI model deployed on each of the cameras 3 (hereinafter, will be referred to as an "edge-side AI model") and/or the AI application, with an operation of the service provider or user being a trigger, as described above will be specifically described with reference to Fig. 27. It is noted that Fig. 27 focuses on one camera 3 among the plurality of cameras 3. In addition, the edge-side AI model to be updated in the descriptions below is, for example, one deployed on the image sensor GS included in the camera 3, but of course, the edge-side AI model may alternatively be one deployed outside the image sensor GS in the camera 3.

First, in Processing Step PS1, a service provider or user instructs relearning of an AI model. This instruction is performing by using an API (Application Programming Interface) function of an API module included in the cloud-side information processing apparatus. Also, the instruction specifies an image amount (for example, number of images) to be used for learning. Hereinafter, the image amount to be used for learning will also be referred to as a "predetermined number of images".

Upon receiving the instruction, the API module transmits a relearning request and image amount information to a Hub (similar to that shown in Fig. 5) in Processing Step PS2.

In Processing Step PS3, the Hub transmits an update notification and the image amount information to the camera 3 as the edge-side information processing apparatus.

In Processing Step PS4, the camera 3 transmits image data obtained by photographing to an image DB (Database) in a storage group. This photographing processing and transmission processing are repeated until reaching a predetermined number of images required for relearning.

It is noted that when an inference result is obtained by performing inference processing on the image data, the camera 3 may store the inference result in the image DB as metadata of the image data in Processing Step PS4.

By storing the inference result of the camera 3 in the image DB as the metadata, it is possible to carefully select data necessary for the relearning of an AI model that is executed on the cloud side. Specifically, relearning can be performed using only image data in which the inference result in the camera 3 and a result of an inference executed using abundant computer resources in the cloud-side information processing apparatus differ. Therefore, it becomes possible to shorten a time required for relearning.

After the photographing and transmission of the predetermined number of images are ended, in Processing Step PS5, the camera 3 notifies the Hub that the transmission of the predetermined number of pieces of image data has been completed.

Upon receiving the notification, in Processing Step PS6, the Hub notifies an orchestration tool that preparation of relearning data has been completed.

In Processing Step PS7, the orchestration tool transmits an instruction to execute labeling processing to a labeling module.

The labeling module acquires the image data to be subjected to the labeling processing from the image DB (Processing Step PS8), and performs the labeling processing.

The labeling processing used herein may be processing of performing the classification described above, processing of estimating a gender and/or age of a subject of an image and assigning a label, processing of estimating a pose of the subject and assigning a label, or processing of estimating a behavior of the subject and assigning a label.

The labeling processing may be performed manually or automatically. In addition, the labeling processing may be completed in the cloud-side information processing apparatus, or may be realized by using a service provided by another server apparatus.

The labeling module that has ended the labeling processing stores labeling result information in a data set DB in Processing Step PS9. Here, the information stored in the data set DB may be a set of label information and image data, or may be image ID (Identification) information for specifying image data instead of the image data itself.

A storage management section that has detected that the labeling result information has been stored notifies the orchestration tool in Processing Step PS10.

The orchestration tool that has received the notification confirms that the labeling processing for the predetermined number of pieces of image data has ended, and in Processing Step PS11, transmits a relearning instruction to a relearning module.

The relearning module that has received the relearning instruction acquires a data set to be used for learning from the data set DB in Processing Step PS12, and acquires an AI model to be updated from the learned AI model DB in Processing Step PS13.

The relearning module performs relearning of an AI model using the acquired data set and AI model. The updated AI model obtained in this manner becomes an AI model for which the drift problem described above has been solved, and is stored again in the learned AI model DB in Processing Step PS14.

The storage management section that has detected that the updated AI model has been stored notifies the orchestration tool in Processing Step PS15.

The orchestration tool that has received the notification transmits a conversion instruction of the AI model to a conversion module in Processing Step PS16.

The conversion module that has received the conversion instruction acquires the updated AI model from the learned AI model DB in Processing Step PS17, and performs conversion processing of the AI model.

The conversion processing involves procesing of performing conversion in accordance with specification information and/or the like of the camera 3 as the deployment destination device. This processing involves performing downsizing while minimizing lowering of performance of the AI model as much as possible, and performing conversion of a file format and/or the like so that the AI model can operate on the camera 3.

The AI model converted by the conversion module becomes the edge-side AI model described above. This converted AI model is stored in a converted AI model DB in Processing Step PS18.

The storage management section that has detected that the converted AI model has been stored notifies the orchestration tool in Processing Step PS19.

The orchestration tool that has received the notification transmits a notification for executing an update of the AI model to the Hub in Processing Step PS20. This notification includes information for specifying a location where the AI model to be used for the update is stored.

The Hub that has received the notification transmits an update instruction of the AI model to the camera 3. The update instruction also includes information for specifying a location where the AI model is stored.

In Processing Step PS22, the camera 3 performs processing of acquiring the converted AI model as a target from the converted AI model DB and deploying it. Accordingly, the AI model used by the image sensor GS of the camera 3 is updated.

The camera 3 that has ended the update of the AI model by deployment of the AI model transmits an update completion notification to the Hub in Processing Step PS23.

The Hub that has received the notification notifies the orchestration tool that the AI model update processing of the camera 3 has been completed in Processing Step PS24.

It is noted that although the example in which the AI model is deployed and used within the image sensor GS of the camera 3 (for example, the memory section 45 shown in Fig. 7) has been described herein, the update of an AI model can be performed in a similar manner even in a case where an AI model is deployed and used outside the image sensor in the camera 3 (for example, the memory section 34 shown in Fig. 7) or within the fog server 4 (the storage section 79 shown in Fig. 16).

In that case, an apparatus (location) on which an AI model has been deployed when deploying the AI model is stored in the storage management section on the cloud side or the like, and the Hub reads out the apparatus (location) on which the AI model has been deployed from the storage management section, and transmits an update instruction of the AI model to the apparatus on which the AI model has been deployed.

In Processing Step PS22, the apparatus that has received the update instruction performs processing of acquiring the converted AI model as a target from the converted AI model DB and deploying it. Accordingly, the AI model of the apparatus that has received the update instruction is updated.

It is noted that when performing only the update of the AI model, the processing up to this point is all.

When updating an AI application that uses an AI model in addition to the update of the AI model, processing to be described later is further executed.

Specifically, in Processing Step PS25, the orchestration tool transmits a download instruction of an updated AI application such as firmware to a deployment control module.

In Processing Step PS26, the deployment control module transmits a deployment instruction of the AI application to the Hub. This instruction includes information for specifying a location where the updated AI application is stored.

In Processing Step PS27, the Hub transmits the deployment instruction to the camera 3.

In Processing Step PS28, the camera 3 downloads the updated AI application from a container DB of the deployment control module and deploys it.

It is noted that the descriptions above have been given on the example in which the update of the AI model operating on the image sensor GS of the camera 3 and the update of the AI application operating outside the image sensor GS in the camera 3 are perfromed sequentially.

In addition, the descriptions herein have been given as the AI application for simplifying the descriptions. However, as described above, an AI application is defined by the plurality of SW components such as the SW components B1, B2, B3, ... Bn, and when an AI application is deployed, where each of the SW components has been deployed is stored in the storage management section on the cloud side or the like so that, when performing the processing of Processing Step PS27, the Hub reads out the apparatuses (locations) on which the respective SW components have been deployed from the storage management section, and transmits a deployment instruction to those deployment destination apparatuses. In Processing Step PS28, the apparatus that has received the deployment instruction downloads the updated SW component from the container DB of the deployment control module and deploys it.

It is noted that the AI application referred to herein is an SW component other than the AI model.

In addition, when both the AI model and the AI application are to operate on a single apparatus, both the AI model and the AI application may be collectively updated as one container. In that case, the update of the AI model and the update of the AI application may be performed simultaneously instead of sequentially. This can be realized by executing the processing of Processing Steps PS25, PS26, PS27, and PS28.

For example, when it is possible to deploy containers of both the AI model and the AI application on the image sensor GS of the camera 3, the AI model and the AI application can be updated by executing the processing of Processing Steps PS25, PS26, PS27, and PS28 as described above.

By performing the processing described above, the relearning of an AI model is performed using image data captured in the usage environment of the user. Therefore, it is possible to generate an edge-side AI model that can output a highly precise recognition result in the usage environment of the user.

Furthermore, since the relearning of an AI model can be performed appropriately each time even when the usage environment of the user changes, such as a case where the layout of the store is changed or a case where the istallation location of the camera 3 is changed, it becomes possible to maintain recognition precision by the AI model without degradation.

It is noted that the processing described above may be executed not only when performing the relearning of the AI model, but also when operating the system for the first time in the usage environment of the user.

### <6. Example of screen of marketplace>

An example of a screen presented to the user regarding the marketplace will be described with reference to each figure.

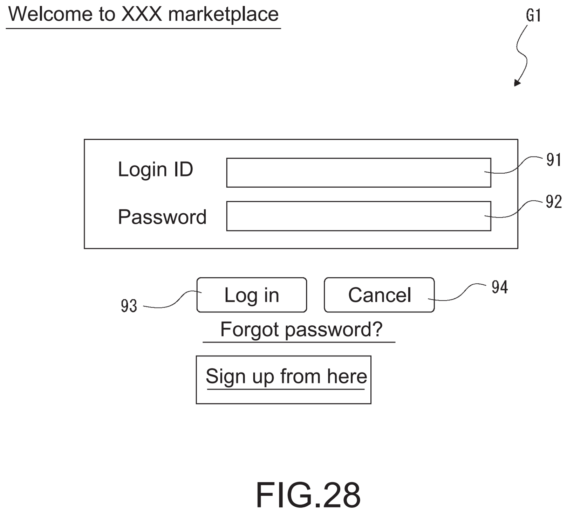

Fig. 28 shows an example of a login screen G1.

The login screen G1 is provided with an ID input field 91 for inputting a user ID and a password input field 92 for inputting a password.

Arranged below the password input field 92 are a login button 93 for logging in and a cancel button 94 for canceling the login.

Arranged further below that as appropriate are an operator for transitioning to a page for users who have forgotten passwords, an operator for transitioning to a page for newly performing user registration, and the like.

When the login button 93 is pressed after an appropriate user ID and password are input, processing of transitioning to a user-specific page is executed in each of the cloud server 1 and the user terminal 2.

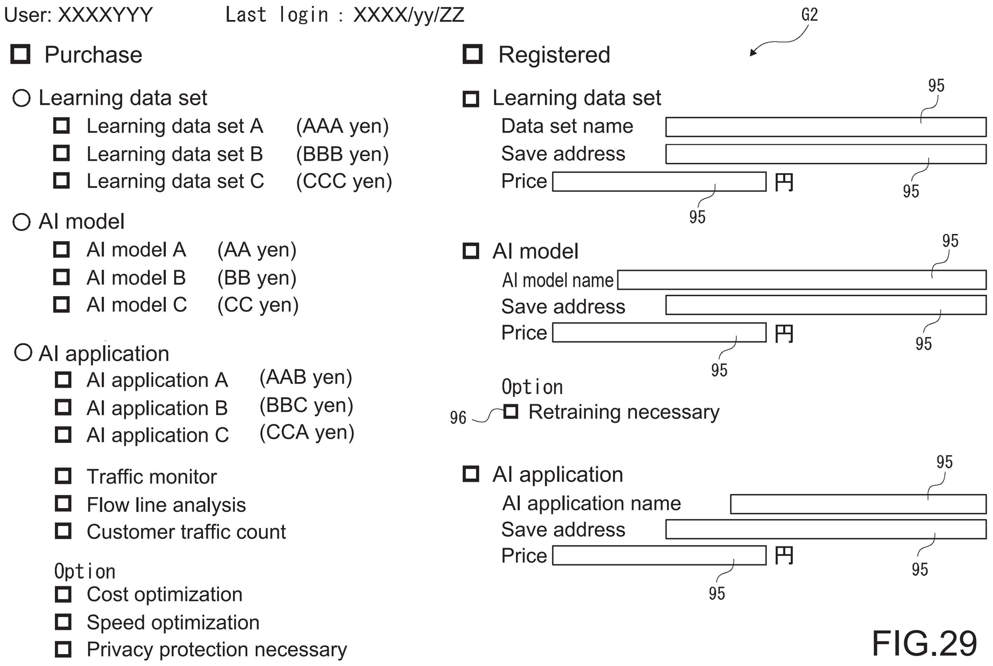

Fig. 29 shows an example of a screen that is presented to, for example, the AI application developer who uses the application developer terminal 2A and/or the AI model developer who uses the AI model developer terminal 2C.

Each of the developers is capable of purchasing learning data sets, AI models, and/or AI applications for development through the marketplace. In addition, the AI applications and AI models developed by the developers themselves can be registered on the marketplace.

In a developer screen G2 shown in Fig. 29, purchasable learning data sets, AI models, AI applications, and the like (hereinafter, will collectively be referred to as "data") are displayed on the left side.

It is noted that although not shown in the figure, when purchasing a learning data set, it is possible to display an image of the learning data set on a display so that, by merely circling only a desired portion of the image using an input apparatus such as a mouse and inputting a name, preparation for learning can be achieved.

For example, when wishing to perform AI learning using an image of a cat, it is possible to prepare an image to which an annotation of a cat is added for AI learning by circling only a portion of the cat on the image and inputting "cat" as a text input.

Further, to make it easier to find desired data, the purpose such as "traffic monitoring", "flow line analysis", or "customer count" may be set to be selectable. In other words, display processing for displaying only data that matches the selected purpose is executed in each of the cloud server 1 and the user terminal 2.

It is noted that a purchase price of each data may also be displayed in the developer screen G2.

Further, on the right side of the developer screen G2, input fields 95 for registering a learning data set collected or created by the developer and an AI model and AI application developed by the developer are provided.

The input fields 95 for inputting a name and a data save location are provided for each data. In addition, for the AI model, a check box 96 for setting whether or not relearning is necessary is provided.

It is noted that it is also possible to provide a price setting field (described as the input field 95 in the figure) and/or the like in which a price required for purchasing registration target data can be set.

Furthermore, at an upper portion of the developer screen G2, a user name, a last login date, and the like are displayed as a part of user information. It is noted that in addition to this, an amount of currency, the number of points, and/or the like that the user can use when purchasing data may also be displayed.

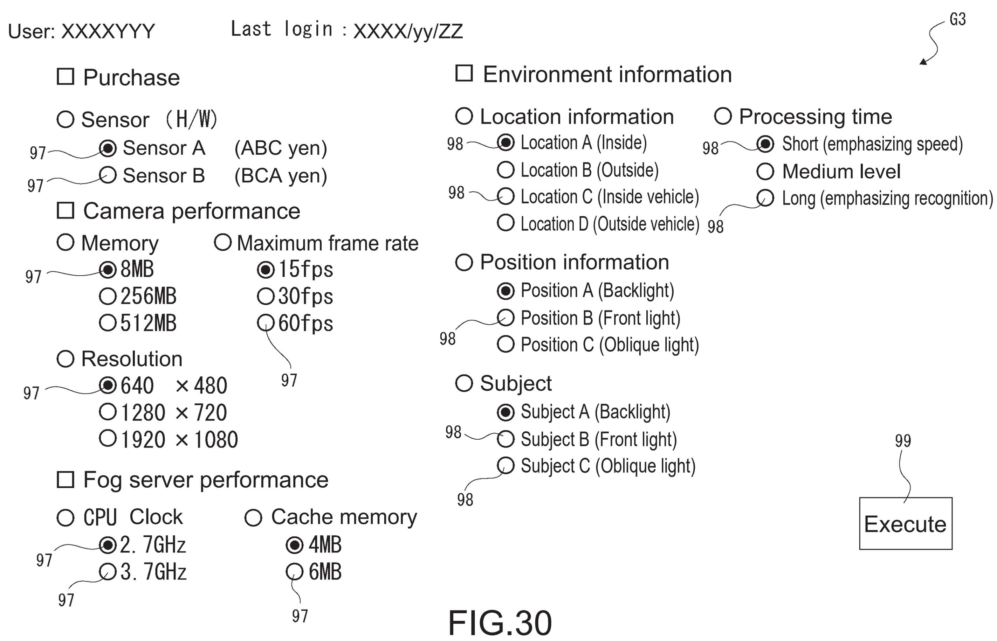

Fig. 30 shows an example of a user screen G3 that is presented to the user (the application user described above) who performs various analyses and the like by deploying AI applications and AI models on the cameras 3 as the edge-side information processing apparatuses managed by the user him/herself, for example.

The user is capable of purchasing the camera 3 to be arranged in a monitoring target space via the marketplace. Therefore, on the left side of the user screen G3, radio buttons 97 with which a type and performance of the image sensor GS to be mounted on the camera 3, performance of the camera 3, and the like can be selected are arranged.

The user is also capable of purchasing an information processing apparatus as the fog server 4 via the marketplace. Therefore, on the left side of the user screen G3, the radio buttons 97 for selecting each performance of the fog server 4 are arranged.

Further, a user who already has the fog server 4 can register the performance of the fog server 4 by inputting performance information of the fog server 4 here.

The user realizes desired functions by installing the purchased cameras 3 (or may be the cameras 3 purchased without using the marketplace) at an arbitrary location such as a store managed by him/herself, but in the marketplace, it is possible to register information on the installation location of the cameras 3 in order to maximize the function of each of the cameras 3.

On the right side of the user screen G3, radio buttons 98 that enable environment information on an environment where the camera 3 is installed to be selected are arranged. The user appropriately selects the environment information on the environment where the camera 3 is installed, to set the optimal image pickup setting described above for the target camera 3.

It is noted that when purchasing the camera 3 and the installation location of the camera 3 to be purchased is determined, each item on the left side and each item on the right side of the user screen G3 can be selected to purchase the camera 3 in which the optimal image pickup setting has been preset according to the planned installation location.

The user screen G3 is provided with an execute button 99. By pressing the execute button 99, a transition is made to a confirmation screen for confirming the purchase or a confirmation screen for confirming the setting of environment information. Accordingly, the user can purchase a desired camera 3 or fog server 4, or set environment information for the camera 3.

In the marketplace, it is possible to change the environment information of each of the cameras 3 in case the installation location of the camera 3 is changed. By re-inputting the environment information on the installation location of the camera 3 in a change screen (not shown), it is possible to re-set an optimal image pickup setting for the camera 3.

### <7. Summary>

As described in the examples described above, the cloud server 1 (or the cloud-side information processing apparatus) as the information processing apparatus according to the present technology, that is included in the information processing system 100, includes the display control section (marketplace function F4) that displays the configuration pattern presentment screen 300 for prompting the user to select a configuration pattern of the information processing system 100 on which application software (AI application) that realizes an application is to be deployed, based on a user requirement on the application.

Even if the user knows the application he or she wishes to introduce, it is not easy to think of a system configuration for realizing the application. According to the present configuration, a screen for selecting a presented system configuration is presented to the user.

Therefore, the user only needs to select one of the presented configuration patterns, which is favorable since the system to be constructed in the user environment becomes clear.

Further, changing the system configuration after introduction requires a heavy workload and large costs for the user, but since, with the present configuration, system configurations that satisfy the user requirement to a certain degree are presented at the time of the first introduction, the necessity to change the system configuration is unlikely to arise. Therefore, it is possible to suppress the workload of the user and unnecessary communication processing related to the change or reconstruction of the system, to thus contribute to cost reduction.

As described above, the application software (AI application) deployed in the information processing system 100 may perform image processing using image data output from the sensor section (image pickup section 41) of the image sensor GS included in the information processing system 100.

The image data refers not only to a color image or monochrome image obtained by an image sensor that receives visible light, but also to a range image obtained by a distance measurement sensor, a heat map image obtained by a thermosensor, a spectroscopic image obtained by a spectroscopic sensor, a polarization image obtained by a polarization sensor, and the like and the like.

Further, the system configuration pattern is a configuration that includes at least the camera 3 including thd image sensor GS.

As the application performed using the camera 3, a wide variety of uses are conceivable, such as a use in a monitoring camera, a use in stockout detection, a use in defect detection, and a use in a behavior analysis.

By presenting appropriate configuration patterns for each of a wide variety of uses to the user, the user can easily select an appropriate system configuration for solving a problem.

As described with reference to Fig. 5 and the like, the image processing executed by the application software (AI application) deployed in the information processing system 100 may include processing that uses an artificial intelligence model (AI model).

This makes it possible to present a configuration for appropriately performing the inference processing that uses an AI model to the user. Therefore, even if the user is not familiar with the requirements and/or the like for the system when performing the inference processing that uses an AI model, the user can select an appropriate system configuration, thereby improving usability.

As described with reference to Fig. 18 and the like, the display control section as the marketplace function F4 of the cloud server 1 may present characteristics information (characteristics information field 305) for each configuration pattern in the configuration pattern presentment screen 300.

The characteristics information may include, for example, information indicating cost trends, privacy protection trends, processing speed trends, inference processing precision trends, and the like.

By presenting these pieces of characteristics information together with each of the presented configuration patterns, the user can select a configuration pattern based on the characteristics information.

This makes it easier for the user to select an appropriate system configuration that suits his/her own purpose, and can improve a satisfaction level when introducing an application.

As described with reference to Fig. 18 and the like, the characteristics information (characteristics information field 305) in the configuration pattern presentment screen 300 displayed by the display control section as the marketplace function F4 of the cloud server 1 may include at least information indicating a privacy protection level.

Accordingly, it becomes possible for the user to select a system configuration while grasping the degree to which privacy will be protected in solving a problem.

Therefore, it becomes possible to suppress dissatisfaction after an application is introduced, and reduce the necessity to change the system configuration. It also becomes possible to suppress costs accompanying the system change.

As described with reference to Fig. 18 and the like, the characteristics information (characteristics information field 305) in the configuration pattern presentment screen 300 displayed by the display control section as the marketplace function F4 of the cloud server 1 may include at least information indicating a cost magnitude level.

Further, the cost may include costs at the time of introduction, running costs, and/or the like.

Accordingly, it becomes possible for the user to select a system configuration while taking into consideration the introduction costs, running costs, and/or the like of the system in solving a problem.

This makes it possible to suppress dissatisfaction after an application is introduced, and reduce the necessity to change the system configuration. It also becomes possible to suppress costs accompanying the system change.

As described with reference to Fig. 19 and the like, the configuration patterns presented in the configuration pattern presentment screen 300 displayed by the display control section as the marketplace function F4 of the cloud server 1 may include at least information on a sensor type of the image sensor GS included in the configuration of the system (information processing system 100).

The sensor type is, for example, a type such as a color sensor for acquiring color images, a monochrome sensor for acquiring monochrome images, a distance measurement sensor, a thermosensor, spectroscopic sensor, or a polarization sensor. Accordingly, the user can select a configuration pattern while taking into consideration the sensor type.

In addition, by presenting characteristics information in accordance with a difference in the sensor type, it becomes possible to select an appropriate sensor type based on the characteristics information even when the user in not grasping the difference in characteristics due to the difference in the sensor type. Accordingly, usability can be improved.

As described with reference to Fig. 18 and the like, the configuration patterns presented in the configuration pattern presentment screen 300 displayed by the display control section as the marketplace function F4 of the cloud server 1 may include at least information on whether or not the edge-side server apparatus (fog server 4) is included in the configuration of the system (information processing system 100).

Accordingly, it becomes possible for the user to select a system configuration while taking into consideration whether or not to install the fog server 4 and the like in his/her own environment instead of on the cloud side.

This makes it possible to prevent problems such as a case where the fog server 4 and the like cannot be installed after determination of the system configuration.

As described with reference to Fig. 13 and the like, the display control section as the marketplace function F4 of the cloud server 1 may execute processing of displaying the requirement input screen 200 for acquiring information on a user requirement.

This enables the cloud server 1 to acquire information indicating a user requirement based on a user input to the requirement input screen 200.

This makes it possible to easily present configuration patterns corresponding to the user requirement.

As described with reference to Fig. 13 and the like, the display control section as the marketplace function F4 of the cloud server 1 may present at least options for selecting a country or region (region input field 201) in the requirement input screen 200.

For example, taking application software that includes processing of performing attribute determination of a person as an example, it is desirable to use a determination program corresponding to the country or region.

With the present configuration, it becomes possible to present, to the user, a favorable configuration pattern for deploying appropriate application software in accordance with the country or region.

Furthermore, particularly when performing the inference processing on an attribute of a person using an AI model, a favorable configuration pattern that takes into account the deployment of the AI model on an apparatus can be presented.

As described with reference to Fig. 13 and the like, the display control section as the marketplace function F4 of the cloud server 1 may present at least options for selecting a field to which the application is to be applied (use case input field 202) in the requirement input screen 200.

The fields to which the application is to be applied include, for example, retail, city, factory, construction machinery, and the like. Furthermore, even within retail, fields may be set at an even finer granularity, such as a shop and a shopping mall.

By having the user select the field, it becomes possible to present system configurations suited for the selected field.

As described with reference to Fig. 13 and the like, the display control section as the marketplace function F4 of the cloud server 1 may present at least options for selecting a purpose for applying the application (purpose input field 203) in the requirement input screen 200.

For example, the purposes are visualization of consumer behaviors, stock management, stocking instruction management, and the like in the field of retail, and are a congestion analysis, search of a parking lot, and the like in the field of city.

By having the user select such a purpose, it becomes possible to present a system configuration suited for the purpose.

As described with reference to Fig. 20 and the like, the application software deployed in the information processing system 100 includes the plurality of SW components, and the display control section as the marketplace function F4 of the cloud server 1 may perform processing of displaying the deployment pattern presentment screen 400 that prompts the user to select a combination of the respective apparatuses included in a selection configuration pattern selected by the user from the configuration patterns (the configuration pattern for which the selection button 306 has been pressed) and the SW components to be deployed.

Accordingly, the user can determine on which apparatuses the SW components are to be deployed by merely selecting the presented option, thereby improving usability.

As described with reference to Fig. 20 and the like, the display control section as the marketplace function F4 of the cloud server 1 may present detailed characteristics information for each deployment pattern (detailed characteristics information field 405) in the deployment pattern presentment screen 400.

For example, an index indicating the privacy protection level in a plurality of levels for each combination of the SW components and the deployment destination apparatuses, an index indicating a level of costs in a plurality of levels, and the like are presented to the user.

Accordingly, it becomes possible for the user to select a deployment pattern based on the detailed characteristics information (index), thus making it possible to suppress the occurrence of a system replacement or the like after the introduction of the application.

As described with reference to Fig. 20 and the like, the detailed characteristics information in the deployment pattern presentment screen 400 displayed by the display control section as the marketplace function F4 of the cloud server 1 may include at least information indicating the privacy protection level in a plurality of levels.

Accordingly, it becomes possible for the user to select a deployment pattern while grasping the extent to which privacy is protected.

This makes it possible to suppress dissatisfaction after the introduction of the application, and reduce the necessity to change the system configuration. It also becomes possible to suppress costs accompanying the system change.

An information processing method according to the present technology includes executing, by a computer apparatus, processing of causing the configuration pattern presentment screen 300 to be displayed based on a user requirement on an application, the configuration pattern presentment screen 300 used for prompting the user to select a configuration pattern of the information processing system 100 in which application software (AI application) that realizes the application is to be deployed.

A program according to the present technology causes an arithmetic processing apparatus to execute a function of causing the configuration pattern presentment screen 300 to be displayed based on a user requirement on an application, the configuration pattern presentment screen 300 used for prompting the user to select a configuration pattern of the information processing system 100 in which application software (AI application) that realizes the application is to be deployed.

Such a program can be recorded in advance in an HDD (Hard Disk Drive) as a recording medium built into a device such as a computer apparatus, a ROM in a microcomputer including a CPU, or the like. Alternatively, the program can be temporarily or permanently stored (recorded) in a removable recording medium such as a flexible disk, a CD-ROM (Compact Disk Read Only Memory), an MO (Magneto Optical) disk, a DVD (Digital Versatile Disc), a Blu-ray disc^{®}, a magnetic disk, a semiconductor memory, or a memory card. Such a removable recording medium can be provided as so-called packaged software.

Furthermore, such a program can be installed from a removable recording medium into a personal computer or the like, or can be downloaded from a download site via a network such as a LAN (Local Area Network) or the Internet.

It is noted that the effects described in the present specification are mere examples and are not limit, and other effects may also be obtained.

Furthermore, the examples described above may be combined in any way, and even when various combinations are used, the various operational effects described above can be obtained.

### <8. Present technology>

It is noted that the present technology can also take the following configurations.
(1) An information processing apparatus, including:
   a display control section which causes a configuration pattern presentment screen to be displayed on a basis of a user requirement on an application, the configuration pattern presentment screen used for prompting a user to select a configuration pattern of a system in which application software that realizes the application is to be deployed.
(2) The information processing apparatus according to (1), in which
   the application software performs image processing that uses image data output from a sensor section of an image sensor included in the system.
(3) The information processing apparatus according to (2), in which
   the image processing includes processing that uses an artificial intelligence model.
(4) The information processing apparatus according to any one of (1) to (3), in which
   the display control section causes characteristics information for each of the configuration patterns to be presented in the configuration pattern presentment screen.
(5) The information processing apparatus according to (4), in which
   the characteristics information includes at least information indicating a privacy protection level.
(6) The information processing apparatus according to any one of (4) to (5), in which
   the characteristics information includes at least information indicating a cost magnitude level.
(7) The information processing apparatus according to any one of (1) to (6), in which
   the configuration pattern includes at least information of a sensor type of an image sensor included in a configuration of the system.
(8) The information processing apparatus according to any one of (1) to (7), in which
   the configuration pattern includes at least information indicating whether or not an edge-side server apparatus is included in a configuration of the system.
(9) The information processing apparatus according to any one of (1) to (8), in which
   the display control section executes processing of causing a requirement input screen for acquiring information of the user requirement to be displayed.
(10) The information processing apparatus according to (9), in which
   the display control section causes at least options for selecting a country or region to be presented in the requirement input screen.
(11) The information processing apparatus according to any one of (9) to (10), in which
   the display control section causes at least options for selecting a field to which the application is to be applied to be presented in the requirement input screen.
(12) The information processing apparatus according to any one of (9) to (11), in which
   the display control section causes at least options for selecting a purpose for applying the application to be presented in the requirement input screen.
(13) The information processing apparatus according to any one of (1) to (12), in which
   the application software includes a plurality of software components, and
   the display control section performs processing of causing a deployment pattern presentment screen to be displayed, the deployment pattern presentment screen used for prompting the user to select a combination of each apparatus included in a selection configuration pattern selected from the configuration patterns by the user and the software component to be deployed.
(14) The information processing apparatus according to (13), in which
   the display control section causes detailed characteristics information for each deployment pattern to be presented in the deployment pattern presentment screen.
(15) The information processing apparatus according to (14), in which
   the detailed characteristics information includes at least information indicating a privacy protection level in a plurality of levels.
(16) An information processing method, including:
   executing, by a computer apparatus, processing of causing a configuration pattern presentment screen to be displayed on a basis of a user requirement on an application, the configuration pattern presentment screen used for prompting a user to select a configuration pattern of a system in which application software that realizes the application is to be deployed.
(17) A program for causing an arithmetic processing apparatus to execute a function of:
   causing a configuration pattern presentment screen to be displayed on a basis of a user requirement on an application, the configuration pattern presentment screen used for prompting a user to select a configuration pattern of a system in which application software that realizes the application is to be deployed.

### Reference Signs List

- 1: cloud server (information processing apparatus)
- 4: fog server (edge-side server apparatus)
- 5: management server (information processing apparatus)
- 41: image pickup section (sensor section)
- 100: information processing system
- 200: requirement input screen
- 300: configuration pattern presentment screen
- 400: deployment pattern presentment screen
- F4: marketplace function (display control section)
- GS: image sensor

## Claims

1. An information processing apparatus, comprising:
a display control section which causes a configuration pattern presentment screen to be displayed on a basis of a user requirement on an application, the configuration pattern presentment screen used for prompting a user to select a configuration pattern of a system in which application software that realizes the application is to be deployed.

2. The information processing apparatus according to claim 1, wherein
the application software performs image processing that uses image data output from a sensor section of an image sensor included in the system.

3. The information processing apparatus according to claim 2, wherein
the image processing includes processing that uses an artificial intelligence model.

4. The information processing apparatus according to claim 1, wherein
the display control section causes characteristics information for each of the configuration patterns to be presented in the configuration pattern presentment screen.

5. The information processing apparatus according to claim 4, wherein
the characteristics information includes at least information indicating a privacy protection level.

6. The information processing apparatus according to claim 4, wherein
the characteristics information includes at least information indicating a cost magnitude level.

7. The information processing apparatus according to claim 1, wherein
the configuration pattern includes at least information of a sensor type of an image sensor included in a configuration of the system.

8. The information processing apparatus according to claim 1, wherein
the configuration pattern includes at least information indicating whether or not an edge-side server apparatus is included in a configuration of the system.

9. The information processing apparatus according to claim 1, wherein
the display control section executes processing of causing a requirement input screen for acquiring information of the user requirement to be displayed.

10. The information processing apparatus according to claim 9, wherein
the display control section causes at least options for selecting a country or region to be presented in the requirement input screen.

11. The information processing apparatus according to claim 9, wherein
the display control section causes at least options for selecting a field to which the application is to be applied to be presented in the requirement input screen.

12. The information processing apparatus according to claim 9, wherein
the display control section causes at least options for selecting a purpose for applying the application to be presented in the requirement input screen.

13. The information processing apparatus according to claim 1, wherein
the application software includes a plurality of software components, and
the display control section performs processing of causing a deployment pattern presentment screen to be displayed, the deployment pattern presentment screen used for prompting the user to select a combination of each apparatus included in a selection configuration pattern selected from the configuration patterns by the user and the software component to be deployed.

14. The information processing apparatus according to claim 13, wherein
the display control section causes detailed characteristics information for each deployment pattern to be presented in the deployment pattern presentment screen.

15. The information processing apparatus according to claim 14, wherein
the detailed characteristics information includes at least information indicating a privacy protection level in a plurality of levels.

16. An information processing method, comprising:
executing, by a computer apparatus, processing of causing a configuration pattern presentment screen to be displayed on a basis of a user requirement on an application, the configuration pattern presentment screen used for prompting a user to select a configuration pattern of a system in which application software that realizes the application is to be deployed.

17. A program for causing an arithmetic processing apparatus to execute a function of:
causing a configuration pattern presentment screen to be displayed on a basis of a user requirement on an application, the configuration pattern presentment screen used for prompting a user to select a configuration pattern of a system in which application software that realizes the application is to be deployed.
